# EUROPÄISCHE PATENTANMELDUNG

(11) **EP 4 190 504 A1**
(43) Veröffentlichungstag der Anmeldung: **07.06.2023**
(21) Anmeldenummer: 21211570.3
(22) Anmeldetag: 01.12.2021
(51) Int. Cl.: B25F 5/00

(54) **SYSTEM MIT EINER WERKZEUGMASCHINE UND EINER ENERGIEVERSORGUNGSVORRICHTUNG**

(71) Anmelder: Hilti Aktiengesellschaft, 9494 Schaan (LI)
(72) Erfinder: Hartmann, Markus, 87665 Mauerstetten (DE); Meixner, Ralf, 87656 Germaringen (DE); Stanger, Robert, 87600 Kaufbeuren (DE); Holubarsch, Markus, 86899 Landsberg am Lech (DE)
(74) Vertreter: Hilti Aktiengesellschaft Corporate Intellectual Property

(57) **Zusammenfassung**

Die vorliegende Erfindung betrifft ein System (100) umfassend eine Werkzeugmaschine (10) und eine Energieversorgungsvorrichtung (10), wobei die Energieversorgungsvorrichtung (20) zur Versorgung der Werkzeugmaschine (10) mit elektrischer Energie vorgesehen ist. Die Energieversorgungsvorrichtung (20) kann über eine Schnittstelle (30) lösbar mit der Werkzeugmaschine (10) verbunden werden, wobei die Schnittstelle (30) mindestens einen weiblichen Kontaktpartner (40) und einen männlichen Kontaktpartner (50) umfasst. Die Schnittstelle (30) weist mindestens ein elastisches Mittel (60) zur Reduzierung einer Relativbewegung zwischen dem männlichen Kontaktpartner (50) und dem weiblichen Kontaktpartner (40) auf, wobei das mindestens eine elastische Mittel (60) zur Reduzierung der Relativbewegung zwischen den Kontaktpartnern (40, 50) dazu eingerichtet ist, an dem mindestens einen männlichen Kontaktpartner (50) und/oder an dem mindestens einen weiblichen Kontaktpartner (40) anzugreifen. Es werden ferner Verfahren zum Verbinden einer Energieversorgungsvorrichtung (20) mit einer Werkzeugmaschine (10) über eine Schnittstelle (30) offenbart, sowie eine Schnittstelle (30) selbst. In einem zweiten Aspekt betrifft die Erfindung eine Energieversorgungsvorrichtung (10) zur Verwendung in dem vorgeschlagenen System (100).

## Beschreibung

Die vorliegende Erfindung betrifft ein System umfassend eine Werkzeugmaschine und eine Energieversorgungsvorrichtung, wobei die Energieversorgungsvorrichtung zur Versorgung der Werkzeugmaschine mit elektrischer Energie vorgesehen ist. Die Energieversorgungsvorrichtung kann über eine Schnittstelle lösbar mit der Werkzeugmaschine verbunden werden, wobei die Schnittstelle mindestens einen weiblichen Kontaktpartner und einen männlichen Kontaktpartner umfasst. Die Schnittstelle weist mindestens ein elastisches Mittel zur Reduzierung einer Relativbewegung zwischen dem männlichen Kontaktpartner und dem weiblichen Kontaktpartner auf, wobei das mindestens eine elastische Mittel zur Reduzierung der Relativbewegung zwischen den Kontaktpartnern dazu eingerichtet ist, an dem mindestens einen männlichen Kontaktpartner und/oder an dem mindestens einen weiblichen Kontaktpartner anzugreifen. Es werden darüber hinaus Verfahren zum Verbinden einer Energieversorgungsvorrichtung mit einer Werkzeugmaschine über eine Schnittstelle offenbart, sowie eine Schnittstelle selbst. In einem zweiten Aspekt betrifft die Erfindung eine Energieversorgungsvorrichtung zur Verwendung in dem vorgeschlagenen System.

### Hintergrund der Erfindung:

Sogenannte kabellose Werkzeugmaschinen, wie beispielsweise Akku-Schrauber, Bohrmaschinen, Sägen, Schleifgeräte, oder dergleichen, können zur Energieversorgung mit einer Energieversorgungsvorrichtung verbunden werden. Die Energieversorgungsvorrichtung kann beispielsweise als Akkumulator ("Akku") ausgebildet sein oder einen solchen umfassen. Akkumulatoren weisen üblicherweise eine Vielzahl an Energiespeicherzellen auf, auch Akku-Zellen genannt, mit deren Hilfe elektrische Energie aufgenommen, gespeichert und wieder abgegeben werden kann. Wenn der Akkumulator mit einer Werkzeugmaschine verbunden ist, kann die in den Energiespeicherzellen gespeicherte elektrische Energie an die Verbraucher (z.B. ein bürstenloser Elektromotor) der Werkzeugmaschine zugeführt werden. Zum Aufladen, d.h. Befüllen der Energiespeicherzellen mit elektrischer Energie, wird der Akkumulator mit einer Ladevorrichtung, wie einem Ladegerät, verbunden, sodass elektrische Energie zu den Energiespeicherzellen gelangen kann.

Bei der Verwendung bzw. beim Arbeiten mit einer akku-betriebenen Werkzeugmaschine kann es zu nicht unerheblichen Vibrationen und Erschütterungen an der Werkzeugmaschine sowie an der mit der Werkzeugmaschine verbundenen Energieversorgungsvorrichtung kommen. Dies ist insbesondere der Fall, wenn es sich bei der Werkzeugmaschine um ein Abrisswerkzeug, wie z.B. ein Meißel- oder Abbruchhammer, handelt. Durch die Vibrationen und Erschütterungen während der Verwendung der Werkzeugmaschine werden nahezu sämtliche Komponenten und Baugruppen der Werkzeugmaschine, sowie des Energieversorgungsvorrichtung mehr oder weniger stark belastet. Diese Belastungen können schließlich zu Beschädigungen an den jeweiligen Bauteilen oder sogar zu einem Totalausfall der ganzen Werkzeugmaschine führen.

In den meisten Fällen sind die Energieversorgungsvorrichtung und die Werkzeugmaschine über eine formschlüssige Verbindung miteinander verbunden, beispielsweise über eine Verriegelung oder einen Rast-Mechanismus. Solche formschlüssigen Verbindungen sind in der Regel mit einem Spiel behaftet, wobei das Spiel unerwünschte Relativbewegungen zwischen der Energieversorgungsvorrichtung und der Werkzeugmaschine ermöglicht. Insbesondere dann, wenn diese Relativbewegungen auf die Kontaktpartner von Energieversorgungsvorrichtung und Werkzeugmaschine, übertragen werden, die die form- und/oder reibschlüssige Verbindung erzeugen, kann ein starker Verschleiß auftreten, der die Lebenszeit der Schnittstelle zwischen Energieversorgungsvorrichtung und Werkzeugmaschine erheblich verkürzen kann.

Eine besondere technische Herausforderung stellt insofern die Schnittstelle zwischen Werkzeugmaschine und Energieversorgungsvorrichtung dar. An der Schnittstelle sind die elektrischen Kontakte der Werkzeugmaschine und die elektrischen Kontakte der Energieversorgungsvorrichtung ("Kontaktpartner") so miteinander verbunden, dass die in den Energiespeicherzellen gespeicherte elektrische Energie von dem Akkumulator zu der Werkzeugmaschine gelangen kann.

Die Vibrationen und Erschütterungen an der Werkzeugmaschine sowie an der mit der Werkzeugmaschine verbundenen Energieversorgungsvorrichtung können zu einer Relativbewegung und sogar zu einer tatsächlichen Unterbrechung der Kontaktverbindung führen. Die Relativbewegung ist zu vermeiden, da durch diese es zu einer Abnutzung bzw. zu einem frühzeitigen Verschleiß der Kontakte kommen kann. Eine Unterbrechung der Kontaktverbindung kann zu einer unerwünschten Funkenbildung oder sogar zu einem Lichtbogen an den Kontakten führen. Darüber hinaus kann die Temperatur im Kontaktbereich zwischen den elektrischen Kontakten bzw. im Bereich der Schnittstelle in einem unerwünschten Maß ansteigen.

Die Aufgabe, die der vorliegenden Erfindung zugrunde liegt, besteht darin, die vorstehend beschriebenen Mängel und Nachteile des Standes der Technik zu überwinden und eine Schnittstelle, ein System aus Werkzeugmaschine und Energieversorgungsvorrichtung und ein Verfahren zum Verbinden einer Energieversorgungsvorrichtung mit einer Werkzeugmaschine bereitzustellen, mit denen die Leistungsdichte der Schnittstelle verbessert und ihre Lebensdauer verlängert werden kann. Insbesondere würde es die Fachwelt begrüßen, wenn mit der Schnittstelle höhere Ströme als bisher von der Energieversorgungsvorrichtung an die Werkzeugmaschine übertragen werden könnten.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System umfassend eine Werkzeugmaschine und eine Energieversorgungsvorrichtung vorgesehen, wobei die Energieversorgungsvorrichtung zur Versorgung der Werkzeugmaschine mit elektrischer Energie ausgebildet ist. Die Energieversorgungsvorrichtung kann über eine Schnittstelle lösbar mit der Werkzeugmaschine verbunden werden, wobei die Schnittstelle mindestens einen weiblichen Kontaktpartner und einen männlichen Kontaktpartner umfasst. Die Schnittstelle weist mindestens ein elastisches Mittel zur Reduzierung einer Relativbewegung zwischen dem männlichen Kontaktpartner und dem weiblichen Kontaktpartner auf, wobei das elastische Mittel zur Reduzierung der Relativbewegung zwischen den Kontaktpartnern dazu eingerichtet ist, an dem mindestens einen männlichen Kontaktpartner und/oder an dem mindestens einen weiblichen Kontaktpartner anzugreifen. Das elastische Mittel zur Reduzierung einer Relativbewegung zwischen den Kontaktpartnern kann an einem der beteiligten Kontaktpartner angreifen. Mit anderen Worten kann das elastische Mittel zur Reduzierung der Relativbewegung zwischen den Kontaktpartnern an dem mindestens einen männlichen Kontaktpartner oder an dem mindestens einen weiblichen Kontaktpartner angreifen, wobei die Kontaktpartner eine form- und/oder reibschlüssige Verbindung zwischen der Werkzeugmaschine und der Energieversorgungsvorrichtung bilden. Mit noch anderen Worten kann das elastische Mittel an einem der Kontaktpartner, nämlich entweder dem männlichen oder den weiblichen Kontaktpartner, angreifen, um eine lösbare Verbindung zwischen der Werkzeugmaschine und der Energieversorgungsvorrichtung herzustellen. Es stellt einen wesentlichen Vorteil der Erfindung dar, dass die mit der form- und/oder reibschlüssigen Verbindung besonders große elektrische Ströme übertragen werden können und dass überraschenderweise die Relativwege zwischen den Kontaktpartnern besonders kurz gehalten, wenn nicht gar auf ein Minimum reduziert werden können. Dadurch kann vorteilhafterweise die Lebensdauer der Schnittstelle zwischen Werkzeugmaschine und Energieversorgungsvorrichtung erheblich verlängert werden. Die weiblichen und die männlichen Kontaktpartner der Schnittstelle können im Sinne der Erfindung bevorzugt auch als «Leistungskontakte» der Schnittstelle bezeichnet werden.

Durch die Vorsehung des mindestens einen elastischen Mittels zur Reduzierung der Relativbewegung kann auf einfache Art und Weise an den Kontaktpartnern wirkenden Vibrationen und Erschütterungen ausgeglichen werden, die zu einer Relativbewegung und sogar zu einer tatsächlichen Unterbrechung der Kontaktverbindung zwischen dem Akkumulator und der Werkzeugmaschine führen können.

Mit der Erfindung, insbesondere durch die Vorsehung des mindestens einen elastischen Mittels zur Reduzierung einer Relativbewegung, kann ein Relativweg zwischen dem männlichen und dem weiblichen Kontaktpartner der Schnittstelle erheblich reduziert werden, so dass mechanische Reibungsverluste und elektrische Stromführungsverluste zwischen den Kontaktpartner in einem erheblichem Umfang vermindert werden können. Insbesondere kann mit der Erfindung ein Relativweg zwischen dem männlichen und dem weiblichen Kontaktpartner der Schnittstelle auf beispielsweise weniger als 0,3 mm, vorzugsweise weniger als 0,1 mm und besonders bevorzugt auf weniger als 0,05 mm reduziert werden.

Die Reduzierung der Relativbewegungen bzw. die Verkürzung der Relativwege der Kontaktpartner der Schnittstelle hat mehrere vorteilhafte Effekte. Ein erster Effekt betrifft die Relativbewegungen bzw. die Relativwege zwischen den Kontaktpartnern, die die form- und/oder kraftschlüssige Verbindung zwischen Werkzeugmaschine und Energieversorgungsvorrichtung erzeugen. Diese Relativbewegungen bzw. die Relativwege können unerwünschterweise den Übergangswiderstand der Schnittstelle erhöhen, wobei diese Erhöhung zunächst unabhängig von dem Verschleißzustand der Schnittstelle ist. Das bedeutet im Sinne der Erfindung bevorzugt, dass die erhöhten Übergangswiderstände auch bereits im Neuzustand eines Systems aus Werkzeugmaschine und Energieversorgungsvorrichtung auftreten können, wenn es in der Schnittstelle zwischen den Systembestandteilen zu unerwünschten Relativbewegungen der Kontaktpartner der Schnittstelle kommt. Darüber hinaus können die Relativbewegungen zwischen den Kontaktpartnern zu Verschleiß und später Oxidation führen, so dass der Übergangswiderstand der Schnittstelle nachteiligerweise weiter steigen kann. Insbesondere kann ein Verschleiß der edlen Schichten der Kontaktpartner auftreten, welcher später zu atmosphärischer Oxidation unter Einbeziehung des Luftsauerstoffs und/oder zu Reiboxidation führt. Indem die Erfindung die Relativbewegungen zwischen den Kontaktpartnern und damit den Übergangswiderstand erheblich vermindert, leistet sie einen wesentlichen Beitrag dazu, dass mit der vorgeschlagenen Schnittstelle besonders große elektrische Ströme von der Energieversorgungsvorrichtung an die Werkzeugmaschine übertragen werden können. Außerdem vermindert die Erfindung einen unerwünschten Verschleiß der Kontaktpartner und leistet somit einen ebenso wertvollen Beitrag zur Erhöhung der Lebensdauer der Schnittstelle.

Es ist im Sinne der Erfindung bevorzugt, dass die elastischen Mittel zur Verkürzung der Relativwege zwischen den Leistungskontakten der Schnittstelle zu einer mechanischen Entkopplung zwischen Energieversorgungsvorrichtung und Einheit aus männlichen und weiblichen Kontaktpartner führen. Alternativ können die elastischen Mittel zu einer mechanischen Entkopplung zwischen Werkzeugmaschine und Einheit aus männlichen und weiblichen Kontaktpartner führen. Aufgrund der mechanischen Entkopplung wird eine etwaige unerwünschte Relativbewegung zwischen den Kontaktpartnern nicht übertragen, sondern vorteilhafterweise von dem elastischen Mittel kompensiert.

Tests haben gezeigt, dass mit der Erfindung ein unerwünschtes Ansteigen der Temperatur im Kontaktbereich zwischen dem männlichen Kontaktpartner und dem weiblichen Kontaktpartner wirkungsvoll vermieden werden kann. Beispielsweise kann die Temperatur, die im Kontaktbereich zwischen den Kontaktpartnern gemessen wird, um bis zu 30 Grad reduziert werden, da die Güte und die Qualität des Kontakts zwischen den Kontaktpartner mit der Erfindung, d.h. durch die Vorsehung der elastischen Mittel zur Reduzierung der Relativbewegung, erheblich verbessert werden kann. Die Verbesserung des Übergangswiderstands führt vorteilhafterweise zu einer erhöhten Stromtragfähigkeit der Schnittstelle, so dass mit der Erfindung Werkzeugmaschinen in größeren Leistungsklassen, d.h. besonders leistungsstarke Werkzeugmaschinen, betrieben bzw. mit elektrischer Energie versorgt werden können. Die Verringerung der Verlustleistung im Übergangswiderstand kann vorteilhafterweise zu einer reduzierten thermischen Belastung der umgebenden Bauteile führen. Insbesondere Bauteile aus thermoplastischem Material können dadurch wirksam vor Beschädigungen durch zu große Wärmeeinwirkung geschützt werden.

Die Temperatur-Reduktion führt vorteilhafterweise dazu, dass die Lebensdauer der Komponenten der Schnittstelle zwischen der Werkzeugmaschine und der Energieversorgungsvorrichtung verlängert werden kann. Bewirkt wird die Temperatur-Reduktion vorteilhafterweise dadurch, dass der Übergangswiderstand zwischen der Werkzeugmaschine und der Energieversorgungsvorrichtung durch den stabileren Kontakt bzw. den reduzierten Relativweg zwischen den Kontaktpartner erheblich verringert werden kann.

Es ist im Sinne der Erfindung bevorzugt, dass derjenige Kontaktpartner, an dem das elastische Mittel zur Reduzierung der Relativbewegung angreift, beweglich gelagert ist. Mit anderen Worten kann derjenige Kontaktpartner, mit dem das elastische Mittel zur Reduzierung der Relativbewegung wirkverbunden ist, beweglich gelagert sein. Es ist im Sinne der Erfindung bevorzugt, dass der beweglich gelagerte Kontaktpartner und/oder die beweglich gelagerte Aufnahmevorrichtung angefedert ist. Wenn mehr als ein Kontaktpartner pro Verbindungspartner der Schnittstelle vorhanden ist oder wenn die Werkzeugmaschine und/oder die Energieversorgungsvorrichtung mehr als eine Aufnahmevorrichtungen aufweisen, kann es im Sinne der Erfindung bevorzugt sein, dass die beweglich gelagerten Kontaktpartner und/oder die beweglich gelagerten Aufnahmevorrichtungen angefedert sind. Auf diese Weise können die Relativbewegungen zwischen den Kontaktpartnern und der Übergangswiderstand weiter erheblich vermindert und die Lebensdauer der Schnittstelle erheblich verlängert werden. Darüber hinaus kann es bevorzugt sein, dass das elastische Mittel zur Reduzierung der Relativbewegung an eine später beschriebene Aufnahmevorrichtung angreift. Die Aufnahmevorrichtung kann männliche und/ oder weibliche Leistungskontakte aufnehmen und ebenfalls beweglich gelagert sein. Die Aufnahmevorrichtung ist insbesondere dann beweglich gelagert, wenn sie mit dem mindestens einen elastischen Mittel zur Reduzierung der Relativbewegung zwischen den Leistungskontakten wirkverbunden ist bzw. wenn diese elastischen Mittel an der Aufnahmevorrichtung angreifen. Die Formulierung, dass das mindestens eine elastische Mittel zur Reduzierung der Relativbewegung zwischen den Kontaktpartnern dazu eingerichtet ist, an dem mindestens einen männlichen Kontaktpartner oder an dem mindestens einen weiblichen Kontaktpartner anzugreifen, bedeutet im dem Ausführungsbeispiel der Erfindung, bei dem einzelne Kontaktpartner in einer Aufnahmevorrichtung angeordnet vorliegen, bevorzugt, dass das mindestens eine elastische Mittel zur Reduzierung der Relativbewegung zwischen den Kontaktpartnern dazu eingerichtet ist, an der Aufnahmevorrichtung, in der einzelne Kontaktpartner enthalten sind, anzugreifen. Die Aufnahmevorrichtung kann einen Kontaktblock bzw. einen Kontaktmittelblock bilden, der mit Hilfe der elastischen Mittel beweglich bzw. angefedert gelagert sein kann. Es ist im Sinne der Erfindung bevorzugt, dass die Aufnahmevorrichtung die Kontaktpartner eines Verbindungspartners der Schnittstelle, also Werkzeugmaschine oder Energieversorgungsvorrichtung, umfasst. Es kann allerdings im Sinne der Erfindung auch bevorzugt sein, dass mehrere Aufnahmevorrichtungen vorgesehen sind, die jeweils eine Teilmenge der Kontaktpartner eines Verbindungspartners aufnehmen können. Vorzugsweise können auch dieses mehreren Aufnahmevorrichtungen dadurch angefedert sein, dass das elastische Mittel zur Reduzierung der Relativbewegung an diesen mehreren Aufnahmevorrichtungen angreift. Dabei können die Aufnahmevorrichtungen die Leistungskontakte, d.h. die weiblichen und männlichen Kontaktpartner, und/oder die Kommunikationselemente umfassen. Es ist im Kontext der Erfindung bevorzugt, das elastische Mittel zur Reduzierung der Relativbewegung auch als «elastisches Mittel zur Anfederung» zu bezeichnen.

Vorzugsweise ist derjenige Kontaktpartner, an dem das elastische Mittel zur Reduzierung der Relativbewegung angreift, im verbundenen Zustand relativ zur Werkzeugmaschine oder relativ zur Energieversorgungsvorrichtung beweglich gelagert. Wenn die Anfederung auf Seiten der Werkzeugmaschine erfolgt, d.h. das mindestens eine elastische Mittel an den Kontaktpartner bzw. der Aufnahmevorrichtung der Werkzeugmaschine angreift, führt die so ausgestaltete Anfederung im Bereich der Werkzeugmaschine vorzugsweise dazu, dass der entsprechende Kontaktpartner im verbundenen Zustand relativ zur Werkzeugmaschine beweglich gelagert ist. Wenn die Anfederung auf Seiten der Energieversorgungsvorrichtung erfolgt, d.h. das mindestens eine elastische Mittel an den Kontaktpartner bzw. der Aufnahmevorrichtung der Energieversorgungsvorrichtung angreift, führt die so ausgestaltete Anfederung im Bereich der Energieversorgungsvorrichtung vorzugsweise dazu, dass der entsprechende Kontaktpartner im verbundenen Zustand relativ zur Energieversorgungsvorrichtung beweglich gelagert ist.

Die Formulierung, wonach das elastische Mittel zur Reduzierung der Relativbewegung zwischen den Kontaktpartnern dazu eingerichtet ist, an dem mindestens einen männlichen Kontaktpartner und/oder an dem mindestens einen weiblichen Kontaktpartner anzugreifen, umfasst zum einen die Möglichkeit, dass das elastische Mittel an einer der Gruppen von Kontaktpartnern angreift, beispielsweise an allen Kontaktpartnern, die an der Energieversorgungsvorrichtung angeordnet vorliegen, oder an allen Kontaktpartnern, die an der Werkzeugmaschine angeordnet vorliegen. Es kann aber im Sinne der Erfindung auch bevorzugt sein, dass sowohl die Werkzeugmaschine, als auch die Energieversorgungsvorrichtung elastische Mittel zur Anfederung ihrer Kontaktpartner umfassen. In dieser Ausgestaltung der Erfindung greift das elastische Mittel an dem mindestens einen männlichen Kontaktpartner und an dem mindestens einen weiblichen Kontaktpartner an. Wenn eine oder beide Gruppen der Kontaktpartner in einer Aufnahmevorrichtung angeordnet vorliegen, kann das elastische Mittel an einer der Aufnahmevorrichtungen angreifen. Wenn die Kontaktpartner von sowohl der Energieversorgungsvorrichtung, als auch der Werkzeugmaschine eine Aufnahmevorrichtung aufweisen, kann das elastische Mittel auch an beiden Aufnahmevorrichtungen angreifen. Ein Angreifen an sowohl den Kontaktpartnern der Werkzeugmaschine, als auch an den Kontaktpartnern der Energieversorgungsvorrichtung kann beispielsweise dadurch realisiert werden, dass bei einem der Verbindungspartner - Energieversorgungsvorrichtung oder Werkzeugmaschine - eine harte Feder verwendet wird und beim anderen Verbindungspartner - Werkzeugmaschine oder Energieversorgungsvorrichtung - eine weiche(re) Feder. Der Begriff «harte Feder» ist im Sinne der Erfindung als eine Feder mit einer hohen Federsteifigkeit zu verstehen, während der Begriff «weiche Feder» ist im Sinne der Erfindung als eine Feder mit einer geringeren Federsteifigkeit zu verstehen ist.

Es ist im Sinne der Erfindung bevorzugt, dass der mindestens eine männliche Kontaktpartner an der Werkzeugmaschine angeordnet vorliegt. Die männlichen Kontaktpartner können Schwerter umfassen, die in einen weiblichen Kontaktpartner der Schnittstelle bzw. des anderen Systembestandteils eingeführt werden können. Entsprechend einer vorteilhaften Ausführungsform der vorliegenden Erfindung kann vorgesehen sein, dass die männlichen Kontaktpartner in Form von stiftartigen Steckern oder Schwertern und die weiblichen Kontaktpartner der Schnittstelle in Form von Klemmen mit elastisch verformbaren Schenkeln zur Aufnahme der stiftartigen Stecker oder Schwerter ausgestaltet sind. Der männliche Kontaktpartner kann von einem vorstehenden Bereich und einem Anschlag gebildet werden, wobei der vorstehende Bereich in einem gesteckten Zustand der Schnittstelle, in dem die Energieversorgungsvorrichtung mit der Werkzeugmaschine verbunden vorliegt (daher auch: «verbundener Zustand»), in einem der weiblichen Kontaktpartner eingeführt vorliegt. Im unverbundenen Zustand können die Werkzeugmaschine und die Energieversorgungsvorrichtung unabhängig und voneinander getrennt vorliegen. Dies kann beispielsweise der Fall sein, wenn die Energieversorgungsvorrichtung aufgeladen wird und sich in einem Ladegerät zum Aufladen befindet. Es kann im Sinne der Erfindung auch bevorzugt sein, dass der mindestens eine männliche Kontaktpartner an der Energieversorgungsvorrichtung angeordnet vorliegt.

Die Energieversorgungsvorrichtung kann vorzugsweise mindestens einen Akkumulator («Akku») umfassen, wobei die Energieversorgungsvorrichtung dazu eingerichtet ist, die Werkzeugmaschine mit elektrischer Energie zu versorgen. Die Abgabe von elektrischer Energie von der Energieversorgungsvorrichtung an die Werkzeugmaschine erfolgt insbesondere im verbundenen Zustand, in dem die Werkzeugmaschine über die Schnittstelle mit der Energieversorgungsvorrichtung verbunden vorliegt. Die weiblichen und männlichen Kontaktpartner greifen im verbundenen Zustand ineinander, so dass über einen Kontaktbereich zwischen den Kontaktpartner elektrischer Strom bzw. elektrische Energie fließen kann. Tests haben gezeigt, dass durch die Verwendung des mindestens einen elastischen Mittels zur Reduzierung einer Relativbewegung zwischen den Kontaktpartner, das an mindestens einem der Kontaktpartner angreift, deutlich höhere Ströme übertragen werden können als bei konventionellen Kontaktsystemen, wie sie aus dem Stand der Technik der Fall ist. Beispielsweise ermöglicht die Erfindung die Übertragung von Konstant-Strömen in einem Bereich von mehr als 50 Ampère, bevorzugt mehr als 70 Ampère oder besonders bevorzugt mehr als 100 Ampère.

Der Grund dafür, dass mit der vorgeschlagenen Schnittstelle, die mindestens ein elastisches Mittel aufweist, höhere elektrische Ströme von der Energieversorgungsvorrichtung in Richtung der Werkzeugmaschine fließen können, liegt in der Entkopplung der Energieversorgungsvorrichtung von dem mindestens einen Kontaktpaar aus weiblichem und männlichem Kontaktpartner. Diese Entkopplung wird weiter unten ausgeführt.

Das mindestens eine elastische Mittel zur Reduzierung der Relativbewegung kann vorzugsweise mindestens ein elastisches Element, wie eine Feder, umfassen. Das elastische Element kann dabei in Form einer Feder und insbesondere einer Spiral-, Biege- oder Schraubenfeder ausgestaltet sein. Alternativ kann das elastische Element als ein Bauteil aus einem elastisch verformbaren Werkstoff ausgestaltet ist. Als Werkstoff ist dabei auch ein Elastomer möglich. Hierdurch kann auf einfache Art und Weise einer vibrationsbedingten Bewegung des Anschlusselements in mehreren Richtungen, d.h. nicht nur in der Richtung zu oder entgegen dem Anschlusselement, entgegengewirkt werden. Darüber hinaus können die unerwünschten Relativbewegungen zwischen den Kontaktpartnern der Schnittstelle durch die Verwendung eines elastischen Elements wirksam verkürzt werden.

Es ist im Sinne der Erfindung bevorzugt, dass der männliche Kontaktpartner beim Eindringen in den weiblichen Kontaktpartner das mindestens eine elastische Mittel zusammendrückt, so dass das elastische Mittel in einen Spannungszustand gebracht werden. Das Zusammendrücken kann vorzugsweise eine elastische Verformung oder eine Kompression darstellen. Vorzugsweise werden die Begriffe «Zusammendrücken», «Kompression» und «elastische Verformung», sowie die entsprechenden Verben im Kontext der vorliegenden Erfindung synonym verwendet. Das Zusammendrücken des elastischen Mittels führt vorteilhafterweise zu dem Spannungszustand. Alternativ oder ergänzend kann auch der mindestens eine männliche Kontaktpartner angefedert sein. Der Begriff «Anfederung» ist im Sinne der Erfindung so zu verstehen, dass der angefederte Kontaktpartner mit den elastischen Mitteln zu Reduzierung der Relativbewegungen zwischen den Kontaktpartnern wirkverbunden ist. Mit anderen Worten können die elastischen Mittel zur Reduzierung der Relativbewegungen zwischen den Kontaktpartnern an einem der Kontaktpartner angreifen, wodurch vorteilhafterweise eine Anfederung des entsprechenden Kontaktpartners erreicht wird. Es ist im Sinne der Erfindung bevorzugt, dass das mindestens eine elastische Mittel in dem eingeschobenen, verbundenen bzw. verriegelten Zustand, in dem die Energieversorgungsvorrichtung und die Werkzeugmaschine miteinander verbunden vorliegen, in einem Spannungs- oder gespannten Zustand vorliegt. Es ist im Sinne der Erfindung bevorzugt, dass die elastischen Mittel auch im nicht-verbauten Zustand vorgespannt sind, wobei dadurch ein Kraftfluss innerhalb der Energieversorgungsvorrichtung geschlossen wird. Der mindestens eine weibliche Kontaktpartner kann sich dadurch auf der Energieversorgungsvorrichtung abstützen. Durch die Spannung des mindestens einen elastischen Mittels zur Reduzierung der Relativbewegung zwischen den Kontaktpartnern, insbesondere im verbundenen Zustand des Kontaktsystems, werden die männlichen und die weiblichen Kontaktpartner fest aneinander gedrückt, so dass sich ein besonders guter Kontakt zwischen den Kontaktpartnern ausbildet. Aufgrund dieser «angefederten» Kontaktierung der Kontaktpartner bzw. aufgrund des besonders engen Kontakts der Kontaktpartner kann die Leistungsdichte des erzeugten Kontakts erheblich erhöht werden, so dass mithin eine Übertragung von elektrischen Konstant-Strömen in einem Bereich von mehr als 50 Ampère, bevorzugt mehr als 70 Ampère oder besonders bevorzugt mehr als 100 Ampère ermöglicht wird. Außerdem kann die Lebenszeit des vorgeschlagenen Kontaktsystems wesentlich verlängert werden, so dass das vorgeschlagene Kontaktsystem besonders gut für Energieversorgungsvorrichtungen mit langen Lebenszeiten und/oder hohen Abgabeströmen geeignet ist, weil die höheren mechanischen und/oder elektrischen Anforderungen an eine Schnittstelle durch die Erfindung optimal erfüllt werden können.

Es ist im Sinne der Erfindung bevorzugt, dass beim Verbinden der Energieversorgungsvorrichtung mit der Werkzeugmaschine die Energieversorgungsvorrichtung in beispielsweise einen Hohlraum der Werkzeugmaschine eingeführt wird. Um die elektrische Verbindung zwischen den Verbindungspartnern «Energieversorgungsvorrichtung» und «Werkzeugmaschine» herzustellen, werden in einem ersten Schritt die Kontaktpartner miteinander in Kontakt gebracht. Das passiert vorzugsweise dadurch, dass die Schwerter der männlichen Kontaktpartner in die Aufnahmeklemmen der weiblichen Kontaktpartner eingeführt werden. Dieser Vorgang wird im Sinne der Erfindung bevorzugt auch als «Zusammenschieben der Kontaktpartner» bezeichnet. Es ist im Sinne der Erfindung insbesondere bevorzugt, dass der oder die beweglich gelagerte(n) Kontaktpartner auf den oder die ortsfesten Kontaktpartner geschoben werden, wobei das Spiel bzw. die Bewegungsfreiheit durch die Erfindung vorteilhafterweise im Bereich des beweglich gelagerten Kontaktpartners gewährt wird. Anschließend wird in einem zweiten Schritt das mindestens eine elastische Mittel gespannt, beispielsweise dadurch, dass das elastische Element, zusammengedrückt bzw. elastisch verformt wird. Daran anschließend können zusätzliche mechanische Befestigungs- oder Verriegelungsmechanismen greifen, beispielsweise das Verriegelungselemente einrasten oder in dafür vorgesehenen Ausbuchtungen, Vertiefungen oder Hinterschnitten zu liegen kommen. Es ist im Sinne der Erfindung insbesondere bevorzugt, dass die Spannung des elastischen Elements im verriegelten Zustand vorliegt. Mit anderen Worten kann das elastische Element insbesondere dann zusammengedrückt vorliegen, wenn die Energieversorgungsvorrichtung mit der Werkzeugmaschine verbunden ist. Auch das vorteilhafte Spiel und die Bewegungsfreiheit der angefederten Kontaktpartner bzw. der angefederten Aufnahmevorrichtung(en) sind vorzugsweise im verbundenen Zustand vorhanden. Es ist im Sinne der Erfindung bevorzugt, dass die Verriegelung der Energieversorgungsvorrichtung in der Werkzeugmaschine in einem Kraftfluss der Schnittstelle liegt.

Mithin wird im Kontext der vorliegenden Erfindung ein Verfahren zur Verbindung einer Energieversorgungsvorrichtung mit einer Werkzeugmaschine offenbart, wobei das Verfahren durch folgende Verfahrensschritt gekennzeichnet ist:
a) Zusammenschieben der Kontaktpartner der Energieversorgungsvorrichtung und der Werkzeugmaschine,
b) Spannung des mindestens einen elastischen Mittels zur Anfederung,
c) Einrasten etwaiger Verriegelungselemente, um die Energieversorgungsvorrichtung stabil in der Werkzeugmaschine zu befestigen.

Es ist im Sinne der Erfindung bevorzugt, dass der mindestens eine weibliche Kontaktpartner an der Energieversorgungsvorrichtung angeordnet vorliegt. Der mindestens eine weibliche Kontaktpartner kann vorzugsweise von einer Aufnahmeklemme gebildet werden, die dazu eingerichtet ist, das Schwert des männlichen Kontaktpartners aufzunehmen. Der weibliche Kontaktpartner kann dazu zwei Schenkel aus einem elastischen Material aufweisen, wobei die Schenkel bei der Einführung des männlichen Kontaktpartners auseinandergedrückt werden, so dass der männliche Kontaktpartner in einem Innenraum des weiblichen Kontaktpartners bzw. der Aufnahmeklemme zu liegen kommt. In diesem Fall wird im Sinne der Erfindung von dem verbundenen oder gesteckten Zustand der Schnittstelle gesprochen. Aufgrund der Elastizität des Materials, aus dem die Schenkel des weiblichen Kontaktpartners gebildet sind, drücken sich die Schenkel der Aufnahmeklemme des weiblichen Kontaktpartners in diesem verbundenen Zustand an das Schwert bzw. den vorstehenden Bereich des männlichen Kontaktpartners, so dass ein Kontaktbereich zwischen den Kontaktpartner geschaffen wird. Vorzugsweise wird elektrischer Strom bzw. elektrische Energie über diesen Kontaktbereich zwischen den Kontaktpartnern ausgetauscht, so dass Strom bzw. elektrische Energie von der Energieversorgungsvorrichtung in Richtung der Werkzeugmaschine fließen kann. Es kann im Sinne der Erfindung auch bevorzugt sein, dass der mindestens eine weibliche Kontaktpartner an der Werkzeugmaschine angeordnet vorliegt. Es kann im Sinne der Erfindung auch bevorzugt sein, dass über die Leistungskontakte bevorzugt elektrische Steuersignale zwischen der Werkzeugmaschine und der Energieversorgungsvorrichtung ausgetauscht werden. Diese vorzugsweise elektrischen Steuersignale sind vorzugsweise zu unterscheiden von den vorzugsweise digitalen Steuersignalen und Daten, die über die Kommunikationselemente und/oder über die Kommunikationsverbindung zwischen den Verbindungspartnern «Energieversorgungsvorrichtung» und «Werkzeugmaschine» ausgetauscht werden können. Die bevorzugt elektrischen Steuersignale, die mit Hilfe der Leistungskontakte, d.h. der weiblichen und der männlichen Kontaktpartner, ausgetauscht werden können, weisen vorzugsweise eine Stromstärke von kleiner als 1 Ampère auf, während die elektrischen Ströme, der von der Energieversorgungsvorrichtung in Richtung der Werkzeugmaschine fließen können, deutlich größer als 1 Ampère sein können.

Die Schenkel des weiblichen Kontaktpartners können vorzugsweise in den Kontaktbereichen zum männlichen Kontaktpartner, aus einem guten Leiter, wie Kupfer, gebildet sein. Die weiblichen Kontaktpartner können darüber hinaus Überfedern aus Federstahl umfassen, wobei die Überfedern vorzugsweise dazu eingerichtet sind, die Schenkel der weiblichen Kontaktpartner so zusammenzudrücken, dass im Verbindungsfall ein stabiler Kontakt zwischen den weiblichen und den männlichen Kontaktpartnem entsteht. Neben Federstahl können auch andere Metalle oder Metalllegierungen mit elastischen Eigenschaften zur Herstellung der weiblichen Kontaktpartner verwendet werden. Für die Kontaktbereiche, die zur Übertragung der elektrischen Energie verwendet werden, sind Materialien mit einer guten Leitfähigkeit, einer hohen Streckgrenze und/ oder einer hohen Relaxationsfestigkeit sein, wie beispielsweise CuFe2P oder CuCrSiTi, ganz besonders bevorzugt. Die Kontaktbereiche können vorzugsweise auf den Innenseiten der Schenkel der weiblichen Kontaktpartner vorliegen, wo sie im Verbindungsfall in Kontakt zu den Schwertern der männlichen Kontaktpartner kommen.

Es ist im Sinne der Erfindung bevorzugt, dass die Schenkel des weiblichen Kontaktpartners bzw. der Aufnahmeklemme im Kontaktbereich einen minimalen Abstand aufweisen, um einen besonders guten Kontakt zu dem männlichen Kontaktpartner zu ermöglichen. Vorzugsweise weist der weibliche Kontaktpartner im Kontaktbereich zum männlichen Kontaktpartner eine Verjüngung auf, die durch den minimalen Abstand zwischen den Schenkeln des weiblichen Kontaktpartners definiert wird. Es ist im Sinne der Erfindung bevorzugt, dass die Schenkel des weiblichen Kontaktpartners im Kontaktbereich bzw. im Bereich der Verjüngung bzw. im Bereich des minimalen Schenkelabstands Kupfer aufweisen oder mit einer Kupferschicht beschichtet sind. Darüber hinaus können Beschichtungen verwendet werden, die Nickel und/oder Silber umfassen, ohne darauf beschränkt zu sein. Durch das Beschichtungsmaterial, das vorzugsweise im Kontaktbereich zwischen männlichen und weiblichen Kontaktpartner der vorgeschlagenen Schnittstelle vorliegt, kann der Stromfluss bzw. der Fluss von elektrischer Energie von der Energieversorgungsvorrichtung an die Werkzeugmaschine weiter optimiert werden, so dass insbesondere auch hohe Ströme, wie beispielsweise 50 Ampère, 70 Ampère oder 100 und mehr Ampère durch die Schnittstelle fließen können. Bei den Strömen kann es sich im Kontext der vorliegenden Erfindung insbesondere um Kontant-Ströme handeln.

Dadurch, dass die Energieversorgungsvorrichtung lösbar durch die Schnittstelle mit der Werkzeugmaschine verbunden ist, liegen die jeweiligen elektrischen Kontakte der Werkzeugmaschine sowie der Energieversorgungsvorrichtung vorzugsweise kraftschlüssig aneinander an. Der weibliche Kontaktpartner kann dabei eine bevorzugt federnd gelagerten Klammer oder Aufnahmeklemme umfassen, während der männliche Kontaktpartner ein in die Klammer oder die Aufnahmeklemme einführbares Einschubelement aufweisen kann.

Es ist im Sinne der Erfindung bevorzugt, dass das mindestens eine elastische Mittel zur Reduzierung der Relativbewegung mindestens ein elastisches Element umfasst. Vorzugsweise können der männliche Kontaktpartner und der weibliche Kontaktpartner im verbundenen Zustand eine Einheit bilden, die durch das Einführen des männlichen Kontaktpartners in den weiblichen Kontaktpartner hergestellt wird. Es ist in dieser Ausgestaltung der Erfindung bevorzugt, dass die elastischen Mittel zur Reduzierung der Relativbewegung zwischen den Kontaktpartnern mit der Einheit aus weiblichem und männlichen Kontaktpartner wirkverbunden ist, d.h an der Einheit oder einem der Kontaktpartner der Schnittstelle angreift. Die Einheit aus männlichem und weiblichem Kontaktpartner kann im verbundenen Zustand so in Richtung der Werkzeugmaschine oder in Richtung der Energieversorgungsvorrichtung gedrückt werden, dass sich die Energieversorgungsvorrichtung unabhängig von der Einheit aus männlichem und weiblichem Kontaktpartner bewegen kann. Dadurch wird eine Entkopplung der schwingungsempfindlichen Einheit aus männlichem und weiblichem Kontaktpartner von der Energieversorgungsvorrichtung bewirkt, wobei die Entkopplung von Einheit und Energieversorgungsvorrichtung die Belastbarkeit der Schnittstelle, ihre Lebensdauer und ihre Robustheit gegenüber unerwünschter Erwärmung deutlich verbessert. Überraschenderweise kann der Einheit aus männlichem und weiblichem Kontaktpartner durch die Vorsehung des mindestens einen elastischen Mittels zur Reduzierung der Relativbewegung ein Bewegungsraum gegeben werden, der im Sinne der Erfindung als «Spiel» bezeichnet wird. Innerhalb dieses Bewegungsraums kann sich die Einheit bewegen, ohne an die Grenzwände des Bewegungsraums anzustoßen. Wenn die Einheit aus männlichem und weiblichem Kontaktpartner ortsfest zur Werkzeugmaschine oder zu der Energieversorgungsvorrichtung gelagert ist, kann sich die Energieversorgungsvorrichtung unabhängig von der Einheit um diese herum bewegen, so dass die Bewegung der Energieversorgungsvorrichtung entkoppelt von der berührungs- und schwingungsempfindlichen Einheit aus männlichem und weiblichem Kontaktpartner ist.

Tests haben gezeigt, dass durch die Vorsehung der elastischen Mittel zur Reduzierung der Relativbewegung an der Schnittstelle die Reibkorrosion («fretting») zwischen den Kontaktpartnern der Schnittstelle erheblich reduziert werden kann. Dadurch kann beispielsweise entweder auf weniger hochwertige, kostengünstige Beschichtungen der Kontaktpartner zurückgegriffen werden, oder der Einsatz des mindestens einen elastischen Mittels zur Reduzierung der Relativbewegung führt zu einer längeren Lebensdauer der Schnittstelle und zu einer höheren Leistungsdichte, wobei eine höhere Leistungsdichte im Sinne der Erfindung bevorzugt bedeutet, dass höhere elektrische Ströme durch die Schnittstelle aus männlichem und weiblichem Kontaktpartner übertragen werden können.

Die Erfindung kann eine unerwünschte Bewegung bzw. ein Schwingen der Energieversorgungsvorrichtung zwar nicht verhindern, aber das mindestens eine elastische Mittel zur Reduzierung der Relativbewegung trägt vorteilhafterweise dafür Sorge, dass die berührungs- und schwingungsempfindlichen Paare aus den männlichen und weiblichen Kontaktpartnern von der Energieversorgungsvorrichtung und/oder der Werkzeugmaschine entkoppelt und so vor deren Bewegungen und Schwingungen geschützt sind.

Es ist im Sinne der Erfindung bevorzugt, dass mindestens je ein männlicher und ein weiblicher Kontaktpartner eine Einheit bilden, wobei diese Einheit in einem verbundenen Zustand entkoppelt von einer Bewegung der Energieversorgungsvorrichtung und/oder der Werkzeugmaschine vorliegt. Vorteilhafterweise wird diese Entkopplung der Einheit aus männlichem und weiblichem Kontaktpartner und der Energieversorgungsvorrichtung insbesondere durch das mindestens eine elastische Mittel zur Reduzierung der Relativbewegung bewirkt, das an einem der Kontaktpartner oder an der Einheit aus mindestens je einem männlichen und weiblichen Kontaktpartner angreift. Mit anderen Worten ist es im Sinne der Erfindung bevorzugt, dass die elastischen Mittel zur Reduzierung der Relativbewegung zwischen den Kontaktpartnern dazu eingerichtet sind, an einem der Kontaktpartner oder an der Einheit aus je einem männlichen und weiblichen Kontaktpartner anzugreifen. Die Entkopplung der Einheit von der Energieversorgungsvorrichtung ergibt sich insbesondere dann, wenn das mindestens eine elastische Mittel zur Reduzierung der Relativwege zwischen den Kontaktpartnern an der Energieversorgungsvorrichtung vorliegt. Es kann aber im Sinne der Erfindung auch bevorzugt sein, dass das mindestens eine elastische Mittel zur Reduzierung der Relativwege zwischen den Kontaktpartnern an der Werkzeugmaschine vorliegt. In diesem Fall kann die Einheit aus männlichen und weiblichen Kontaktpartnern vorzugsweise von der Werkzeugmaschine entkoppelt vorliegen.

Es ist im Sinne der Erfindung bevorzugt, dass die Schnittstelle einen bis acht, bevorzugt zwei bis sechs und am meisten bevorzugt vier weibliche Kontaktpartner aufweist. Vorzugsweise weist die Schnittstelle eine korrespondieren Anzahl von männlichen Kontaktpartner auf, so dass je ein männlicher Kontaktpartner und ein weiblicher Kontaktpartner ein Kontaktpaar bilden können. Es kann im Sinne der Erfindung aber auch bevorzugt sein, dass ein Verbindungspartner der Schnittstelle - Werkzeugmaschine oder Energieversorgungsvorrichtung - zwei männliche Kontaktpartner aufweist, während der andere Verbindungspartner der Schnittstelle - Energieversorgungsvorrichtung oder Werkzeugmaschine - vier weibliche Kontaktpartner aufweist. Es würden in diesem Ausführungsbeispiel zwei Stromübertragungs-Paare aus je einem männlichen und einem weiblichen Kontaktpartner gebildet werden, während zwei weibliche Kontaktpartner ungenutzt und «leer» bleiben. Es ist im Sinne der Erfindung bevorzugt, dass die männlichen Kontaktpartner an der Werkzeugmaschine angeordnet vorliegen, während die weiblichen Kontaktpartner an der Energieversorgungsvorrichtung angeordnet vorliegen. Selbstverständlich kann es im Sinne der Erfindung auch bevorzugt sein, dass die männlichen Kontaktpartner an der Energieversorgungsvorrichtung angeordnet vorliegen, während die weiblichen Kontaktpartner an der Werkzeugmaschine angeordnet vorliegen.

Es ist im Sinne der Erfindung bevorzugt, dass die Schnittstelle eine Aufnahmevorrichtung zur Aufnahme von mindestens einem weiblichen Kontaktpartner und/oder von mindestens einem männlichen Kontaktpartner umfasst. Mit anderen Worten kann die Aufnahmevorrichtung dazu eingerichtet sein, mindestens einen weiblichen Kontaktpartner oder mindestens einen männlichen Kontaktpartner oder mindestens einen weiblichen und mindestens einen männlichen Kontaktpartner aufzunehmen. In einem bevorzugten Ausführungsbeispiel der Erfindung kann die Aufnahmevorrichtung mindestens einen weiblichen Kontaktpartners aufnehmen. Es kann im Sinne der Erfindung bevorzugt sein, dass die weiblichen Kontaktpartner einzeln an der Schnittstelle angeordnet vorliegen oder dass sie Bestandteil einer Aufnahmevorrichtung sind, wobei die einzelnen weiblichen Kontaktpartner oder die Aufnahmevorrichtung entweder Bestandteile der Werkzeugmaschine oder der Energieversorgungsvorrichtung sein können. Es ist im Sinne der Erfindung am allermeisten bevorzugt, dass die einzelnen weiblichen Kontaktpartner oder die Aufnahmevorrichtung Bestandteile der Energieversorgungsvorrichtung sind/ist.

Wenn die Werkzeugmaschine und/oder die Energieversorgungsvorrichtung eine Aufnahmevorrichtung zur Aufnahme der jeweiligen Kontaktpartner, d.h. der Leistungskontakte, aufweist/aufweisen, kann diese Aufnahmevorrichtung auch zur Aufnahme der Kommunikationskontakte eingerichtet sein. Mit anderen Worten kann die Aufnahmevorrichtung neben den Leistungskontakten auch Kommunikationselemente umfassen. Es kann im Sinne der Erfindung auch bevorzugt sein, dass die Aufnahmevorrichtung «nur» Leistungskontakte umfasst, während die Schnittstelle zwischen Werkzeugmaschine und Energieversorgungsvorrichtung eine weitere Aufnahmevorrichtung zur alleinigen Aufnahme der Kommunikationselemente umfasst. Vorzugsweise kann auch diese «Kommunikations-Aufnahmevorrichtung» angefedert sein, indem sie ein elastisches Mittel umfasst bzw. indem ein elastisches Mittel an der «Kommunikations-Aufnahmevorrichtung» angreift. Die «Kommunikations-Aufnahmevorrichtung» kann im Sinne der Erfindung bevorzugt auch als «Kommunikationsblock» bezeichnet werden, wobei dieser «Kommunikationsblock» in einer ganz besonders bevorzugten Ausgestaltung der Erfindung für sich, d.h. unabhängig von den Leistungskontakten und deren Aufnahmevorrichtungen, angefedert sein kann. Es ist im Sinne der Erfindung bevorzugt, dass die Kommunikationselemente in einer Kommunikations-Aufnahmevorrichtung angeordnet vorliegen, wobei die Kommunikationselemente einzeln für sich elastische Mittel zur Anfederung aufweisen können. Mit anderen Worten können die Kommunikationselemente einzeln angefedert sein, indem sie jeweils ein ein elastisches Mittel zur Anfederung aufweisen. Wenn die Kommunikationselemente in einer Kommunikations-Aufnahmevorrichtung angeordnet vorliegen, kann die Kommunikations-Aufnahmevorrichtung ein eigenes elastisches Mittel zur Anfederung aufweisen.

Es ist im Sinne der Erfindung bevorzugt, dass die Energieversorgungsvorrichtung eine gerade Anzahl von Kontaktpartner aufweist, wobei es sich bei den Kontaktpartnern um weibliche und/oder männliche Kontaktpartner handeln kann. Die Energieversorgungsvorrichtung weist vorzugsweise einen Pluspol und einen Minuspol auf, wobei jeder der beiden Pole mit einem Kontaktpartner verbunden vorliegt, d.h. einen Kontaktpartner aufweist. Beispielsweise kann die Energieversorgungsvorrichtung zwei, vier, sechs, acht oder mehr Kontaktpartner aufweisen, die einzeln oder in einem Kontaktblock angefedert sein können. Dabei kann vorzugsweise eine Hälfte der Kontaktpartner dem Minuspol der Energieversorgungsvorrichtung zugeordnet werden, während die andere Hälfte der Kontaktpartner dem Pluspol der Energieversorgungsvorrichtung zugeordnet werden kann.

Die Aufnahmevorrichtung kann eine Schublade oder eine Kassette bilden, in der weibliche Kontaktpartner und/oder männliche Kontaktpartner aufgenommen werden können. Es kann auf diese Weise vorteilhafterweise ein Kontaktblock bereitgestellt werden, so dass sich die weiblichen Kontaktpartner gemeinsam bewegen bzw. gemeinsam bewegt werden können. Vorzugsweise kann die die Aufnahmevorrichtung einen bis acht, bevorzugt zwei bis sechs und am meisten bevorzugt vier weibliche Kontaktpartner aufnehmen. Wenn die Aufnahmevorrichtung auch Kommunikationselemente umfasst, kann die Aufnahmevorrichtung beispielsweise vier Leistungskontakte und zwei Kommunikationselemente umfassen.

Es ist im Sinne der Erfindung bevorzugt, dass die Kontaktpartner der Schnittstelle einzel-angefedert sind oder dass ein von den Kontaktpartnern gebildeter Kontaktblock als Ganzes angefedert ist. Wenn die Kontaktpartner einzel-angefedert sind, können die Kontaktpartner einzeln mit den elastischen Mitteln zu Reduzierung des Relativwegs wirkverbunden vorliegen. Wenn die Schnittstelle an einem der Systembeteiligten - d.h. Werkzeugmaschine oder Energieversorgungsvorrichtung - beispielsweise vier Kontaktpartner umfasst, kann jedem dieser vier Kontaktpartner ein elastisches Mittel oder ein elastisches Element zugeordnet sein. Vorzugsweise wird in dieser Ausgestaltung der Erfindung von einer «Einzel-Anfederung der Leistungskontakte der Schnittstelle» gesprochen. Alternativ kann es im Sinne der Erfindung bevorzugt sein, dass ein ganzer Kontaktblock, der vorzugsweise mehrere Kontaktpartner - weibliche und/oder männliche - umfasst, als Ganzes angefedert ist. Ein solcher Kontaktblock wird im Sinne der Erfindung bevorzugt auch als Kontaktmittelblock bezeichnet, wobei der Kontaktmittelblock von einer Aufnahmevorrichtung mit Leistungskontakten gebildet werden kann. Es ist im Sinne der Erfindung bevorzugt, dass der Kontaktblock bzw. die Aufnahmevorrichtung mit einem elastischen Mittel oder einem elastischen Element wirkverbunden sind. Das bedeutet im Sinne der Erfindung bevorzugt, dass dem Kontaktblock oder der Aufnahmevorrichtung ein elastisches Mittel oder ein elastisches Element zugeordnet ist. Vorzugsweise wird in dieser Ausgestaltung der Erfindung von einer «angefederten Aufnahmevorrichtung» oder einem «angefederten Kontaktmittelblock» gesprochen. Es ist im Sinne der Erfindung bevorzugt, dass die Schnittstelle Kommunikationselemente zum Austausch von Daten zwischen der Werkzeugmaschine und der Energieversorgungsvorrichtung umfasst. Beispielsweise kann die Schnittstelle mindestens zwei Kommunikationselemente umfassen, wobei ein erstes Kommunikationselement an der Werkzeugmaschine und ein zweites Kommunikationselement an der Energieversorgungsvorrichtung angeordnet vorliegt. Die Kommunikationselemente können dazu eingerichtet sein, eine Kommunikationsverbindung zwischen der Werkzeugmaschine und der Energieversorgungsvorrichtung herzustellen, wobei die Kommunikationsverbindung drahtbehaftet oder drahtlos ausgebildet sein kann. Mit anderen Worten kann die Kommunikationsverbindung zwischen der Werkzeugmaschine und der Energieversorgungsvorrichtung leitungsgebunden oder «wireless» ausgebildet sein. Beispielweise kann eine drahtlose Kommunikation zwischen der Werkzeugmaschine und der Energieversorgungsvorrichtung auf Bluetooth, WLAN, Zigbee, Funk, Nahfeldkommunikation oder dergleichen beruhen. Zum Beispiel können Transmitter und Receiver als Kommunikationselemente vorgesehen sein.

In einem bevorzugten Ausführungsbeispiel der Erfindung umfasst die Schnittstelle vier Leistungskontakte und zwei Kommunikationselemente. Die Leistungskontakte und die Kommunikationselemente können gemeinsam in einer Aufnahmevorrichtung angeordnet vorliegen, wobei der gemeinsamen Aufnahmevorrichtung mindestens ein elastisches Mittel zur Anfederung zugeordnet ist. Es kann im Sinne der Erfindung aber auch bevorzugt sein, dass die Leistungskontakte einzeln angefedert sind und die Kommunikationselemente eine eigene Kommunikations-Aufnahmevor-richtung aufweisen. Eine Einzel-Anfederung der Leistungskontakte der Schnittstelle kann dadurch bereitgestellt werden, dass den beweglich gelagerten Leistungskontakten der Schnittstelle elastische Mittel zugeordnet sind.

Es kann im Sinne der Erfindung bevorzugt sein, dass die Kommunikationselemente in der Aufnahmevorrichtung integriert vorliegen. Mit anderen Worten kann die Aufnahmevorrichtung mindestens ein Kommunikationselement zur Übertragung von Daten zwischen der Werkzeugmaschine und der Energieversorgungsvorrichtung aufweisen. Die Kommunikationselemente können im Sinne der Erfindung bevorzugt auch als «Kommunikationsstecker» bezeichnet werden, insbesondere dann, wenn die Kommunikationsverbindung leitungsgebunden ausgebildet ist. Es ist im Sinne der Erfindung ganz besonders bevorzugt, dass die Aufnahmevorrichtung zwei Kommunikationselemente aufweist, wobei die Kommunikationselemente vorzugsweise mittig innerhalb der Aufnahmevorrichtung angeordnet vorliegen können.

In einer bevorzugten Ausgestaltung der Erfindung können die Leistungskontakte der Schnittstelle, d.h. die weiblichen und die männlichen Kontaktpartner der Schnittstelle, einzel-angefedert sein, während für die Kommunikationselemente der Schnittstelle eine eigene kleine Aufnahmevorrichtung vorgesehen ist, die mithin eine eigene Schublade oder Kassette für die Kommunikationselemente bildet. Die Aufnahmevorrichtung für die Kommunikationselemente kann ebenfalls Bestandteil der Schnittstelle zwischen Werkzeugmaschine und Energieversorgungsvorrichtung sein.

Es ist im Sinne der Erfindung bevorzugt, dass das mindestens eine elastische Mittel zur Reduzierung der Relativbewegung der Aufnahmevorrichtung - vorzugsweise als Ganzes - zugeordnet ist. In diesem Fall kann beispielsweise eine Aufnahmevorrichtung, die zum Beispiel vier weibliche Kontaktpartner aufnehmen kann, mit einem elastischen Element mit dem entsprechenden Systembestandteil - Werkzeugmaschine oder Energieversorgungsvorrichtung - verbunden vorliegen. Die Entkopplung findet dann beispielsweise zwischen der Energieversorgungsvorrichtung und der Aufnahmevorrichtung statt, so dass die weiblichen Kontaktpartner in der Aufnahmevorrichtung von den Bewegungen und/oder Schwingungen der Energieversorgungsvorrichtung und/oder der Werkzeugmaschine entkoppelt bzw. vor ihnen geschützt sind. Tests haben gezeigt, dass die Verwendung einer Aufnahmevorrichtung besonders gut vor Kippbewegungen schützt und das Reibmoment zwischen den Kontakten erheblich erhöht wird. Die Aufnahmevorrichtung mit den Leistungskontakten kann vorzugsweise einen Kontaktblock bilden, wobei durch die Erfindung dieser bevorzugt beweglich gelagerte bzw. angefederte Kontaktblock besonders gut vor Kippbewegungen u.Ä. geschützt wird. Dieser Vorteil der Erfindung kann dadurch erreicht werden, dass Abstützflächen und die Reibkräfte der einzelnen Klemmkontakte der weiblichen Kontaktpartner seitlich bzw. im Wesentlichen senkrecht zur Einschubrichtung weit voneinander beabstandet sind und somit durch den großen Hebelarm der Lagerung dynamische Kippmomente sehr gut aufgenommen werden können. Gleiches gilt für die Abstützflächen eines Kontakblocks, wenn die weiblichen Kontaktpartner von einer Aufnahmevorrichtung aufgenommen werden. Das eben Gesagte gilt analog auch für männliche Kontaktpartner, insbesondere dann, wenn sie von einer Aufnahmevorrichtung aufgenommen werden und einen Kontaktblock bilden.

Alternativ kann es bevorzugt sein, dass das mindestens eine elastische Mittel zur Reduzierung der Relativbewegung je einem Kontaktpaar aus weiblichen und männlichen Kontaktpartner zugeordnet sind. In diesem Fall kann beispielsweise jedes Kontaktpaar aus weiblichen und männlichen Kontaktpartnern ein eigenes elastisches Mittel zur Reduzierung der Relativbewegung, wie ein elastisches Element, aufweisen und mit Hilfe der elastischen Mittel von den Bewegungen und/oder Schwingungen der Energieversorgungsvorrichtung und/oder der Werkzeugmaschine entkoppelt bzw. vor ihnen geschützt sein.

Gemäß einem Ausführungsbeispiel der Erfindung werden elastische Mittel offenbart, die einer Relativbewegung zwischen Energieversorgungsvorrichtung und Werkzeugmaschine entgegenwirken können. Dabei sind die Energieversorgungsvorrichtung und Werkzeugmaschine über eine Schnittstelle lösbar miteinander verbunden, wobei die Schnittstelle männliche und weibliche Kontaktpartner umfasst. Insbesondere die weiblichen Kontaktpartner können als einzelne Kontakte vorliegen, wobei je ein weiblicher Kontaktpartner dazu ausgebildet ist, einen männlichen Kontaktpartner bzw. sein Schwert aufzunehmen. Alternativ können die weiblichen Kontaktpartner einen Kontaktblock bilden oder in einer Aufnahmevorrichtung vorliegen, wobei der Kontaktblock bzw. die Aufnahmevorrichtung vorzugsweise Bestandteil der Energieversorgungsvorrichtung oder der Werkzeugmaschine sein kann. Es ist im Sinne der Erfindung besonders bevorzugt, dass die weiblichen Kontaktpartner an der Energieversorgungsvorrichtung angeordnet vorliegen. Es kann aber auch bevorzugt sein, dass die weiblichen Kontaktpartner an der Werkzeugmaschine angeordnet vorliegen. Analog können die männlichen Kontaktpartner als einzelne Kontakte ausgebildet vorliegen, wobei je ein männlicher Kontaktpartner dazu ausgebildet ist, mit einem weiblichen Kontaktpartner ein Kontaktpaar mit einem Kontaktbereich für die Übertragung der elektrischen Energie zu bilden. Alternativ können die männlichen Kontaktpartner einen Kontaktblock bilden, der Bestandteil der Energieversorgungsvorrichtung oder der Werkzeugmaschine sein kann. Es ist im Sinne der Erfindung besonders bevorzugt, dass die männlichen Kontaktpartner an der Werkzeugmaschine angeordnet vorliegen. Es kann aber auch bevorzugt sein, dass die männlichen Kontaktpartner an der Energieversorgungsvorrichtung angeordnet vorliegen. Das mindestens eine elastische Mittel zu Reduzierung der Relativbewegung zwischen den Kontaktpartnern ist vorzugsweise dazu eingerichtet, eine Relativbewegung zwischen den Kontaktpartnern der Schnittstelle bzw. der Werkzeugmaschine und der Energieversorgungsvorrichtung zu verhindern bzw. zu vermindern. Das mindestens eine elastische Mittel zu Reduzierung der Relativbewegung kann dabei einzeln auf die männlichen und/oder auf die weiblichen Kontaktpartner der Schnittstelle wirken. Es kann aber im Sinne der Erfindung ebenso gut bevorzugt sein, dass das mindestens eine elastische Mittel zu Reduzierung der Relativbewegung auf die Kontaktblöcke bzw. die Aufnahmevorrichtung für die weiblichen Kontaktpartner wirkt, die von zumeist zwei bis acht Kontaktpartnern gebildet werden. Die einzelnen weiblichen und/oder männlichen Einzelkontakte oder die aus ihnen gebildeten Kontaktblöcke können sowohl an der Werkzeugmaschine, als auch an der Energieversorgungsvorrichtung angeordnet vorliegen, wobei eine Anordnung der weiblichen Kontaktpartner im Bereich der Energieversorgungsvorrichtung und eine Anordnung der männlichen Kontaktpartner im Bereich der Werkzeugmaschine besonders bevorzugt ist.

Die Erfindung betrifft auch eine Schnittstelle zur Übertragung von elektrischer Energie zwischen einer Werkzeugmaschine und einer Energieversorgungsvorrichtung. Die für das System aus Werkzeugmaschine und Energieversorgungsvorrichtung eingeführten Begriffe, Definitionen und technischen Vorteile gelten vorzugsweise für die Schnittstelle, die später beschriebene Energieversorgungsvorrichtung und die Verfahren zum Verbinden einer Energieversorgungsvorrichtung mit einer Werkzeugmaschine mit einer Schnittstelle analog. Die Schnittstelle ist dadurch gekennzeichnet, dass die Schnittstelle mindestens einen männlichen Kontaktpartner und mindestens einen weiblichen Kontaktpartner aufweist, sowie mindestens ein elastisches Mittel zur Reduzierung einer Relativbewegung zwischen dem männlichen Kontaktpartner und dem weiblichen Kontaktpartner.

Darüber hinaus betrifft die Erfindung ein Verfahren zum Verbinden einer Energieversorgungsvorrichtung mit einer Werkzeugmaschine mit einer Schnittstelle, das dadurch gekennzeichnet ist, dass die Schnittstelle mindestens einen männlichen Kontaktpartner und mindestens einen weiblichen Kontaktpartner aufweist, wobei die männlichen Kontaktpartner und die weiblichen Kontaktpartner bei der Herstellung eines Kontakts zum Zwecke der Übertragung von elektrischer Energie von der Energieversorgungsvorrichtung an die Werkzeugmaschine von mindestens einem elastischen Mittel zur Reduzierung einer Relativbewegung unterstützt werden. Es ist im Sinne der Erfindung bevorzugt, dass je ein männlicher und ein weiblicher Kontaktpartner eine Einheit bilden, wobei die Einheit in einem verbundenen Zustand entkoppelt von einer Bewegung der Energieversorgungsvorrichtung vorliegt.

In einem zweiten Aspekt betrifft die Erfindung eine Energieversorgungsvorrichtung zur Verwendung in dem vorgeschlagenen System. Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben.

Die Energieversorgungsvorrichtung kann vorzugsweise einen Akkumulator oder eine bevorzugt wiederaufladbare Batterie aufweisen. Selbstverständlich ist es im Sinne der Erfindung auch möglich, dass die Energieversorgungsvorrichtung zwei oder mehr Akkus und/oder Batterien aufweist. Die Akkus und/oder Batterien können sog. Batteriepacks aufweisen, die beispielsweise zylindrische Zellen umfassen. Diese zylindrischen Zellen können beispielsweise eine chemische Substanz umfassend Lithium-Ionen, Magnesium-Ionen und/oder Natrium-Ionen enthalten, ohne darauf beschränkt zu sein. Es können aber auch anderen Zelltypen, beispielsweise mit quaderder würfelförmigen Zellen im Kontext der vorliegenden Erfindung zum Einsatz kommen.

Bei der Energieversorgungsvorrichtung handelt es sich vorzugsweise um eine Energieversorgungsvorrichtung mit einer besonders hohen Lebensdauer und/oder um eine Energieversorgungsvorrichtung, die dazu eingerichtet ist, besonders hohe Ströme, insbesondere Konstant-Ström von mehr als 50 Ampère, bevorzugt mehr als 70 Ampère und am meisten bevorzugt von mehr als 100 Ampère, abzugeben. Die besonders hohe Lebensdauer kann vorzugsweise dazu führen, dass die Energieversorgungsvorrichtung besonders viele Einschubvorgänge bzw. Einschubzyklen übersteht, ohne zu verschleißen. Darüber hinaus kann die besonders hohe Lebensdauer bedeuten, dass die chemischen Bestandteile der Energieversorgungsvorrichtung dazu eingerichtet sind, häufiger als bisherige Energieversorgungsvorrichtungen aufgeladen werden zu können, ohne wesentlich zu altern. Ein wesentlicher Vorteil des vorgeschlagenen Kontaktsystems besteht darin, dass mit ihm solche leistungsstarken Energieversorgungsvorrichtungen sicher und einfach verbunden werden können. Insbesondere ist das vorgeschlagene Kontaktsystem aufgrund der Anfederung durch die elastischen Mittel in der Lage, höhe Ströme zu übertragen und dabei während der gesamten Lebensdauer der Energieversorgungsvorrichtungen eingesetzt werden zu können, ohne zu verschleißen. Dadurch können die Vorteile neuer Zell- und Batterietechnologien mit Hilfe der Erfindung optimal ausgenutzt werden. Mithin kann mit der Erfindung ein Kontaktsystem aus Werkzeugmaschine und Energieversorgungsvorrichtung bereitgestellt werden, dass einen effizienten Einsatz von Energieversorgungsvorrichtungen in batteriebetriebenen Werkzeugmaschine ermöglicht, dies insbesondere auch für Applikationen und Anwendungen, die sehr hohe elektrische Leistungsanforderungen und/oder sehr hohe Lebensdaueranforderungen an das System bzw. seine Schnittstelle stellen.

Es ist im Sinne der Erfindung bevorzugt, dass die Energieversorgungsvorrichtung mindestens einer Zelle umfasst, wobei die mindestens eine Zelle weist einen Innenwiderstand DCR_I von kleiner als 10 Milliohm (mOhm) auf. In bevorzugten Ausgestaltungen der Erfindung kann der Innenwiderstand DCR_I der mindestens einen Zelle kleiner als 8 Milliohm und bevorzugt kleiner 6 Milliohm sein. Dabei wird der Innenwiderstand DCR_I vorzugsweise nach der Norm IEC61960 gemessen. Der Innenwiderstand DCR_I stellt insbesondere den Widerstand einer Zelle der Energieversorgungsvorrichtung dar, wobei etwaige Komponenten oder Zubehörteile der Zelle keinen Beitrag zum Innenwiderstand DCR_I leisten. Ein geringer Innenwiderstand DCR_I ist von Vorteil, da dadurch unerwünschte Wärme, die abgeführt werden muss, überhaupt nicht entsteht. Der Innenwiderstand DCR_I ist insbesondere ein Gleichstrom-Widerstand, der im Inneren einer Zelle der vorgeschlagenen Energieversorgungsvorrichtung gemessen werden kann. Selbstverständlich kann der Innenwiderstand DCR_I auch Zwischenwerte, wie 6,02 Milliohm; 7,49 Milliohm; 8,33 Milliohm; 8,65 Milliohm oder 9,5 Milliohm, annehmen.

Es hat sich gezeigt, dass mit dem Innenwiderstand DCR_I der mindestens einen Zelle von kleiner als 10 Milliohm eine Energieversorgungsvorrichtung bereitgestellt werden kann, die besonders gute thermische Eigenschaften in dem Sinne aufweist, dass sie besonders gut bei niedrigen Temperaturen betrieben werden kann, wobei der Kühlaufwand überraschend gering gehalten werden kann. Insbesondere ist eine Energieversorgungsvorrichtung mit einem Zell-Innenwiderstand DCR_I von kleiner als 10 Milliohm besonders gut geeignet, um besonders leistungsstarke Werkzeugmaschinen mit elektrischer Energie zu versorgen. Solche Energieversorgungsvorrichtungen können somit einen wertvollen Beitrag dazu leisten, einen Einsatz von akkubetriebenen Werkzeugmaschinen auch in solchen Anwendungsgebieten zu ermöglichen, von denen die Fachwelt bisher davon ausgegangen war, dass diese Anwendungsgebiete akkubetriebenen Werkzeugmaschinen nicht zugänglich sind.

Vorteilhafterweise kann mit eine solchen Energieversorgungsvorrichtung eine Möglichkeit dafür geschaffen werden, eine batterie- oder akkubetriebene Werkzeugmaschine mit einer erfindungsgemäßen Energieversorgungsvorrichtung über einen langen Zeitraum mit einer hohen Abgabeleistung zu versorgen, ohne die umliegenden Kunststoffbauteile oder die Zellchemie innerhalb der Zellen der Energieversorgungsvorrichtung zu schädigen.

Es ist im Sinne der Erfindung bevorzugt, dass ein Verhältnis eines Widerstands der mindestens einen Zelle zu einer Oberfläche A der mindestens einen Zelle kleiner als 0,2 Milliohm/cm² ist, bevorzugt kleiner als 0,1 Milliohm/cm² und am meisten bevorzugt kleiner als 0,05 Milliohm/cm². Bei einer zylindrischen Zelle kann die Oberfläche der Zelle beispielsweise von der Außenfläche des Zylinders, sowie der Oberseite und der Unterseite der Zelle gebildet werden. Es kann darüber hinaus im Sinne der Erfindung bevorzugt sein, dass ein Verhältnis eines Widerstands der mindestens einen Zelle zu einem Volumen V der mindestens einen Zelle kleiner als 0,4 Milliohm/cm³ ist, bevorzugt kleiner als 0,3 Milliohm/cm³ und am meisten bevorzugt kleiner als 0,2 Milliohm/cm³. Der Fachmann kennt für übliche geometrische Formen, wie Quader, Würfel, Kugel oder dergleichen, die Formeln zur Berechnung der Oberfläche oder des Volumens eines solchen geometrischen Körpers. Der Begriff «Widerstand» bezeichnet im Sinne der Erfindung bevorzugt den Innenwiderstand DCR_I, der vorzugsweise nach der Norm IEC61960 gemessen werden kann. Vorzugsweise handelt es sich dabei um einen Gleichstrom-Widerstand.

Es ist im Sinne der Erfindung bevorzugt, dass die mindestens eine Zelle einen Erwärmungskoeffizienten von kleiner als 1,0 W/(Ah·A) aufweist, bevorzugt kleiner als 0,75 W/(Ah·A) und besonders bevorzugt von kleiner als 0,5 W/(Ah·A). Darüber hinaus kann die mindestens eine Zelle dazu ausgebildet sein, im Wesentlichen konstant einen Strom von größer als 1.000 Ampère/Liter abzugeben. Die Angabe des Entladestroms erfolgt in Bezug auf das Volumen der mindestens einen Zelle, wobei als Einheit für das Volumen die Raum-Maßeinheit «Liter» (I) verwendet wird. Die erfindungsgemäßen Zellen sind somit in der Lage, pro Liter Zellvolumen einen Entladestrom von im Wesentlichen konstant größer als 1.000 A abzugeben. Mit anderen Worten ist eine Zelle mit einem Volumen von 1 Liter in der Lage, einen im Wesentlichen konstanten Entladestrom von größer als 1.000 A abzugeben, wobei die mindestens eine Zelle darüber hinaus einen Erwärmungskoeffizienten von kleiner als 1,0 W/(Ah·A) aufweist. In bevorzugten Ausgestaltungen der Erfindung kann die mindestens eine Zelle der vorgeschlagenen Energieversorgungsvorrichtung einen Erwärmungskoeffizienten von kleiner als 0,75 W/(Ah·A), bevorzugt kleiner als 0,5 W/ (Ah·A) aufweisen. Die Einheit des Erwärmungskoeffizienten lautet Watt / (Amperestunden · Ampère). Selbstverständlich kann der Erwärmungskoeffizient auch Zwischenwerte, wie 0,56 W/(Ah.A); 0,723 W/(Ah.A) oder 0,925 W/(Ah.A) aufweisen.

Die Erfindung ermöglicht vorteilhafterweise die Bereitstellung einer Energieversorgungsvorrichtung mit mindestens einer Zelle, die eine verringerte Erwärmung aufweist und somit besonders gut für die Versorgung von Werkzeugmaschine geeignet ist, bei denen hohe Leistungen und hohe Ströme, vorzugsweise Konstant-Ströme, für den Betrieb erwünscht sind. Insbesondere kann mit der Erfindung eine Energieversorgungsvorrichtung für eine Werkzeugmaschine bereitgestellt werden, bei der die Wärme, die gegebenenfalls bei Betrieb der Werkzeugmaschine und bei Abgabe von elektrischer Energie an die Werkzeugmaschine entsteht, besonders einfach und unkompliziert abgeführt werden kann. Tests haben gezeigt, dass mit der Erfindung nicht nur vorhandene Wärme besser abgeführt werden kann. Vielmehr wird mit der Erfindung verhindert, dass Wärme entsteht bzw. die bei Betrieb der Werkzeugmaschine erzeugte Wärmemenge kann mit der Erfindung erheblich reduziert werden. Vorteilhafterweise kann mit der Erfindung eine Energieversorgungsvorrichtung bereitgestellt werden, die vor allem auch solche Werkzeugmaschine optimal mit elektrischer Energie versorgen kann, die hohe Anforderungen an Leistung und Entladestrom stellen. Mit anderen Worten kann mit der Erfindung eine Energieversorgungsvorrichtung für besonders leistungsstarke Werkzeugmaschine bereitgestellt werden, mit denen beispielsweise auf Baustellen schwere Bohr- oder Abbrucharbeiten verrichtet werden.

Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Es ist im Sinne der Erfindung bevorzugt, dass die mindestens eine Zelle eine Temperatur-Abkühl-Halbwertzeit kleiner als 12 Minuten aufweist, bevorzugt kleiner 10 Minuten, besonders bevorzugt kleiner 8 Minuten. Das bedeutet im Sinne der Erfindung bevorzugt, dass sich bei freier Konvektion eine Temperatur der mindestens einen Zelle in weniger als 12, 10 oder 8 min halbiert. Die Temperatur-Abkühl-Halbwertzeit wird vorzugsweise in einem Ruhezustand der Energieversorgungsvorrichtung ermittelt, d.h. wenn die Energieversorgungsvorrichtung nicht in Betrieb, d.h. mit einer Werkzeugmaschine verbunden vorliegt. Vor allem Energieversorgungsvorrichtungen mit Temperatur-Abkühl-Halbwertzeiten von kleiner als 8 min haben sich als besonders geeignet für den Einsatz bei leistungsstarken Werkzeugmaschinen gezeigt. Selbstverständlich kann die Temperatur-Abkühl-Halbwertzeit auch einen Wert von 8,5 Minuten, 9 Minuten 20 Sekunden oder von 11 Minuten 47 Sekunden aufweisen.

Durch die überraschend geringe Temperatur-Abkühl-Halbwertzeit der vorgeschlagenen Energieversorgungsvorrichtung verweilt die im Betrieb der Werkzeugmaschine oder bei ihrem Laden erzeugte Wärme nur für kurze Zeit innerhalb der mindestens einen Zelle. Auf diese Weise kann die Zelle besonders schnell wieder aufgeladen werden und steht zügig für einen erneuten Einsatz in der Werkzeugmaschine zur Verfügung. Vielmehr kann die thermische Belastung der Komponente der Energieversorgungsvorrichtung oder der Werkzeugmaschine mit der vorgeschlagenen Energieversorgungsvorrichtung erheblich reduziert werden. Dadurch kann die Energieversorgungsvorrichtung geschont und ihre Lebenszeit verlängert werden.

Es ist im Sinne der Erfindung bevorzugt, dass die mindestens eine Zelle in einem Batteriepack der Energieversorgungsvorrichtung angeordnet ist. In dem Batteriepack können vorzugsweise eine Reihe von Einzelzellen zusammengefasst werden und auf diese Weise optimal in die Energieversorgungsvorrichtung eingefügt werden. Beispielsweise können 5, 6 oder 10 Zellen einen Batteriepack bilden, wobei auch ganzzahlige Vielfache dieser Zahlen möglich sind. Beispielsweise kann die Energieversorgungsvorrichtung einzelne Zellstränge aufweisen, die beispielsweise 5, 6 oder 10 Zellen umfassen können. Eine Energieversorgungsvorrichtung mit beispielsweise drei Strängen ä fünf Zellen kann beispielsweise 15 Einzelzellen umfassen.

Es ist im Sinne der Erfindung bevorzugt, dass die Energieversorgungsvorrichtung eine Kapazität von wenigstens 2,2 Ah, bevorzugt wenigstens 2,5 Ah aufweist. Tests haben gezeigt, dass die genannten Kapazitätswerte besonders gut für den Einsatz von leistungsstarken Werkzeugmaschinen im Baugewerbe geeignet sind und den dortigen Anforderungen an Verfügbarkeit von elektrischer Energie und möglicher Nutzungsdauer der Werkzeugmaschine besonders gut entsprechen.

Vorzugsweise ist die mindestens eine Zelle der Energieversorgungsvorrichtung dazu eingerichtet, einen Entladestrom über wenigstens 10 s von wenigstens 20 A abzugeben. Beispielsweise kann eine Zelle der Energieversorgungsvorrichtung dazu ausgebildet sein, einen Entladestrom über wenigstens 10 s von wenigstens 20 A, insbesondere wenigstens 25 A, bereitzustellen. Mit anderen Worten kann die mindestens eine Zelle einer Energieversorgungsvorrichtung dazu eingerichtet sein, einen Dauerstrom von wenigstens 20 A, insbesondere von wenigstens 25 A, bereitzustellen.

Gleichfalls ist es denkbar, dass Spitzenströme, insbesondere kurzzeitige Spitzenströme, zu einer starken Erwärmung der Energieversorgungsvorrichtung führen können. Daher ist eine Energieversorgungsvorrichtung mit einer leistungsstarken Kühlung, wie sie durch die vorliegend beschriebenen Maßnahmen erzielt werden kann, besonders vorteilhaft. Denkbar ist beispielsweise, dass die mindestens eine Zelle der Energieversorgungsvorrichtung über 1 Sekunde hinweg wenigstens 50 A bereitstellen kann. Mit anderen Worten ist es im Sinne der Erfindung bevorzugt, dass die mindestens eine Zelle der Energieversorgungsvorrichtung dazu eingerichtet ist, einen Entladestrom über wenigstens 1 s von wenigstens 50 A bereitzustellen. Werkzeugmaschinen können oftmals kurzzeitig hohe Leistungen benötigen. Eine Energieversorgungsvorrichtung, deren Zellen dazu in der Lage sind, einen derartigen Spitzenstrom und/oder einen derartigen Dauerstrom abzugeben, kann daher besonders geeignet für leistungsstarke Werkzeugmaschinen sein, wie sie auf Baustellen eingesetzt werden.

Es ist im Sinne der Erfindung bevorzugt, dass die mindestens eine Zelle einen Elektrolyten umfasst, wobei der Elektrolyt bei Raumtemperatur vorzugsweise in einem flüssigen Aggregatzustand vorliegt. Der Elektrolyt kann Lithium, Natrium und/oder Magnesium umfassen, ohne darauf beschränkt zu sein. Insbesondere kann der Elektrolyt Lithium-basiert sein. Alternativ oder ergänzend kann er auch Natrium-basiert sein. Denkbar ist auch, dass der Akkumulator Magnesium-basiert ist. Die elektrolyt-basierte Energieversorgungsvorrichtung kann eine Nennspannung von wenigstens 10 V, bevorzugt wenigstens 18 V, insbesondere von wenigstens 28 V, beispielsweise 36 V, aufweisen. Ganz besonders bevorzugt ist eine Nennspannung in einem Bereich von 18 bis 22 V, insbesondere in einem Bereich von 21 bis 22 V. Die mindestens eine Zelle der Energieversorgungsvorrichtung kann beispielsweise eine Spannung von 3,6 V aufweisen, ohne darauf beschränkt zu sein.

Es ist im Sinne der Erfindung bevorzugt, dass die Energieversorgungsvorrichtung beispielsweise mit einer Laderate von 1,5 C, bevorzugt 2 C und am meisten bevorzugt von 3 C geladen wird. Unter einer Laderate xC kann dabei die Stromstärke verstanden werden, die benötigt wird, um eine entladene Energieversorgungsvorrichtung in einem dem Zahlwert x der Laderate x C entsprechenden Bruchteil einer Stunde vollständig aufzuladen. Eine Laderate von 3 C ermöglicht beispielsweise ein vollständiges Aufladen des Akkumulators binnen 20 Minuten.

Es ist im Sinne der Erfindung bevorzugt, dass die mindestens Zelle der Energieversorgungsvorrichtung eine Oberfläche A und ein Volumen V aufweist, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.

Die Formulierung, dass die Oberfläche A der mindestens einen Zelle ist größer ist als beispielsweise das Achtfache der dritten Wurzel des Quadrats des Volumens V kann vorzugsweise auch durch die Formel ***A***>8****V***^(**2**/**3**) zum Ausdruck gebracht werden. In einer anderen Schreibweise kann dieser Zusammenhang dadurch beschrieben werden, dass das Verhältnis A/V von Oberfläche zu Volumen größer ist als das Achtfache des Kehrwerts der dritten Wurzel des Volumens.

Dabei sind zur Prüfung, ob die obige Relation erfüllt ist, stets Werte in der gleichen Grundeinheit einzusetzen. Wenn beispielsweise ein Wert für die Oberfläche in m² in die obige Formel eingesetzt wird, so wird für das Volumen vorzugsweise ein Wert in der Einheit m³ eingesetzt. Wenn beispielsweise ein Wert für die Oberfläche in der Einheit cm² in die obige Formel eingesetzt wird, so wird für das Volumen vorzugsweise ein Wert in der Einheit cm³ eingesetzt. Wenn beispielsweise ein Wert für die Oberfläche in der Einheit mm² in die obige Formel eingesetzt wird, so wird für das Volumen vorzugsweise ein Wert in der Einheit mm³ eingesetzt.

Zellgeometrien, die beispielsweise die Relation von ***A***>8****V***^(**2**/**3**) erfüllen, weisen vorteilhafterweise ein besonders günstiges Verhältnis zwischen der für die Kühlwirkung maßgeblichen Außenfläche der Zelle zum Zellvolumen auf. Dabei haben die Erfinder erkannt, dass das Verhältnis von Oberfläche zu Volumen der mindestens einen Zelle der Energieversorgungsvorrichtung einen wichtigen Einfluss auf die Entwärmung der Energieversorgungsvorrichtung hat. Die verbesserte Kühlfähigkeit der vorgeschlagenen Energieversorgungsvorrichtung kann vorteilhafterweise durch eine Erhöhung der Zelloberfläche bei gleichbleibendem Volumen und geringem Innenwiderstand der mindestens einen Zelle erreicht werden. Es ist im Sinne der Erfindung bevorzugt, dass eine geringe Zelltemperatur bei gleichzeitig hoher Leistungsabgabe vorzugsweise dann ermöglicht werden kann, wenn der Innenwiderstand der Zelle reduziert wird. Die Reduzierung des Innenwiderstands der mindestens einen Zelle kann zu einer geringeren Wärmeentstehung führen. Darüber hinaus kann eine geringe Zelltemperatur durch die Verwendung von Zellen, bei denen die Oberfläche A von mindestens einer Zelle innerhalb der Energieversorgungsvorrichtung größer ist als das Sechsfache, bevorzugt das Achtfache und besonders bevorzugt das Zehnfache der dritten Wurzel des Quadrats des Volumens V der mindestens einen Zelle. Dadurch kann insbesondere die Wärmeabgabe an die Umgebung verbessert werden.

Es hat sich gezeigt, dass Energieversorgungsvorrichtungen, deren Zellen die genannte Relation erfüllen, deutlich besser gekühlt werden können als bisher bekannte Energieversorgungsvorrichtungen mit beispielsweise zylinderförmigen Zellen. Die obige Relation kann beispielsweise dadurch erfüllt werden, dass die Zellen der vorgeschlagenen Energieversorgungsvorrichtung zwar eine zylinderförmige Grundform aufweisen, aber zusätzliche Oberflächen vergrößernde Elemente auf ihrer Oberfläche angeordnet sind. Dabei kann es sich beispielsweise um Rippen, Zähne oder dergleichen handeln. Es können im Rahmen der Erfindung auch Zellen verwendet werden, die keine zylinderförmige oder zylindrische Grundform aufweisen, sondern vollkommen anders geformt sind. Beispielsweise können die Zellen der vorgeschlagenen Energieversorgungsvorrichtung eine im Wesentlichen quader- oder würfelförmige Grundform aufweisen. Der Begriff "im Wesentlichen" ist dabei für den Fachmann nicht unklar, weil der Fachmann weiß, dass im Kontext der vorliegenden Erfindung beispielsweise auch ein Quader mit Einbuchtungen oder abgerundeten Ecken und/oder Kanten unter den Begriff "im Wesentlichen quaderförmig" fallen soll.

Es ist im Sinne der Erfindung bevorzugt, dass die mindestens eine Zelle einen Zellkern aufweist, wobei kein Punkt innerhalb des Zellkerns mehr als 5 mm von einer Oberfläche der Energieversorgungsvorrichtung entfernt ist. Wenn die Energieversorgungsvorrichtung entladen wird, beispielsweise wenn sie mit einer Werkzeugmaschine verbunden ist und mit der Werkzeugmaschine gearbeitet wird, kann im Zellkern Wärme entstehen. Diese Wärme kann in dieser konkreten Ausgestaltung der Erfindung auf verhältnismäßig kurzem Wege bis zur Oberfläche der Zelle der Energieversorgungsvorrichtung transportiert werden. Von der Oberfläche kann die Wärme optimal abgeführt werden. Somit kann eine solche Energieversorgungsvorrichtung eine gute Kühlung, insbesondere eine vergleichsweise gute Selbstkühlung, aufweisen. Die Zeitdauer bis zum Erreichen der Grenztemperatur kann verlängert und/oder das Erreichen der Grenztemperatur vorteilhafterweise gänzlich vermieden werden. Als weiterer Vorteil der Erfindung kann Innerhalb des Zellkerns eine verhältnismäßig homogene Temperaturverteilung erreicht werden. Hierdurch kann sich eine gleichmäßige Alterung des Akkumulators ergeben. Dies wiederum kann die Lebensdauer der Energieversorgungsvorrichtung erhöhen.

Es ist im Sinne der Erfindung bevorzugt, dass die mindestens eine Zelle eine maximale Konstant-Strom-Abgabe von größer als 20 Ampère, bevorzugt größer als 30 Ampère, am meisten bevorzugt größer 40 Ampère aufweist. Die maximale Konstant-Strom-Abgabe ist die Menge an Strom einer Zelle oder einer Energieversorgungsvorrichtung, die entnommen werden kann, ohne dass die Zelle oder die Energieversorgungsvorrichtung an eine Temperatur-Obergrenze gelangt. Mögliche Temperatur-Obergrenze können in einem Bereich von 60 °C oder 70 °C liegen, ohne darauf beschränkt zu sein. Die Einheit der maximalen Konstant-Strom-Abgabe ist Ampère.

Bei allen Wertebereichen, die im Kontext der vorliegenden Erfindung genannt werden, sollen stets auch alle Zwischenwerte als offenbart gelten. Als Beispiel sollen bei der maximalen Konstant-Strom-Abgabe auch Werte zwischen 20 und 30 A als offenbart gelten, also zum Beispiel 21; 22,3; 24, 25,55 oder 27,06 Ampère usw. Darüber hinaus sollen auch Werte zwischen 30 und 40 A als offenbart gelten, also zum Beispiel 32; 33,3; 36, 38,55 oder 39,07 Ampère usw.

Es ist im Sinne der Erfindung bevorzugt, dass die Energieversorgungsvorrichtung eine Entlade-C-Rate von größer als 80 . t^(-0,45) aufweist, wobei der Buchstabe "t" für die Zeit in der Einheit Sekunden steht. Die C-Rate ermöglicht vorteilhafterweise eine Quantifizierung der Lade- und Entladeströme für Energieversorgungsvorrichtungen, wobei die hier verwendete Enlade-C-Rate insbesondere die Quantifizierung der Entladeströme von Energieversorgungsvorrichtungen ermöglicht. Mit der C-Rate können beispielsweise die maximal zulässigen Lade- und Entladeströme angegeben werden. Diese Lade- und Entladeströme hängen vorzugsweise von der Nennkapazität der Energieversorgungsvorrichtung ab. Die ungewöhnlich hohe Entlade-C-Rate von 80 · t^(-0,45) bedeutet vorteilhafterweise, dass mit der vorgeschlagenen Energieversorgungsvorrichtung besonders hohe Entladeströme erreicht werden können, die für den Betrieb von leistungsstarken Werkzeugmaschinen im Baugewerbe erforderlich sind. Beispielsweise können die Entladeströme in einem Bereich von größer als 40 Ampère, bevorzugt größer als 60 Ampère oder noch mehr bevorzugt größer als 80 Ampère liegen.

Es ist im Sinne der Erfindung bevorzugt, dass die Zelle einen Zelltemperaturgradienten von kleiner 10 Kelvin aufweist. Der Zelltemperaturgradient ist vorzugsweise ein Maß für Temperaturunterschiede innerhalb der mindestens einen Zelle der vorgeschlagenen Energieversorgungsvorrichtung, wobei es im Sinne der Erfindung bevorzugt ist, dass die Zelle eine möglichst gleichmäßige Temperaturverteilung aufweist, d.h. dass eine Temperatur in einem inneren Bereich der Zelle möglichst wenig abweicht von einer Temperatur, die im Bereich einer Mantel- oder Außenfläche der Zelle gemessen wird.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung des Systems aus Werkzeugmaschine und Energieversorgungsvorrichtung
- Fig. 2: mögliche Ausgestaltung der Oberseite einer Energieversorgungsvorrichtung einer bevorzugten Ausgestaltung des vorgeschlagenen Systems
- Fig. 3: mögliche Ausgestaltung einer Einheit aus weiblichem und männlichem Kontaktpartner
- Fig. 4: weitere mögliche Ausgestaltung einer Einheit aus weiblichem und männlichem Kontaktpartner
- Fig. 5: Darstellung eines möglichen Ablaufs der Verbindung von Energieversorgungsvorrichtung und Werkzeugmaschine
- Fig. 6: Darstellung verschiedener Kombinationen von Anfederungen und Anordnungen der Kontaktpartner
- Fig. 7: Darstellung verschiedener Anordnungen der Kontaktpartner und ihre Belegungen
- Fig. 8: Darstellung einer möglichen Ausgestaltung einer Aufnahmevorrichtung
- Fig. 9: Darstellung einer möglichen Integration von Kommunikations-Elementen bzw. einer Kommunikations-Aufnahmevorrichtung in die Schnittstelle

### Ausführungsbeispiele und Figurenbeschreibung:

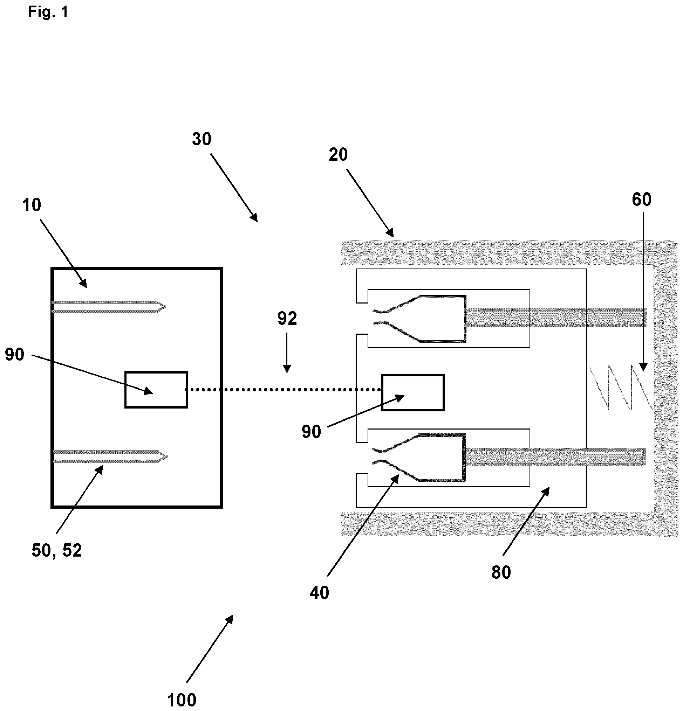

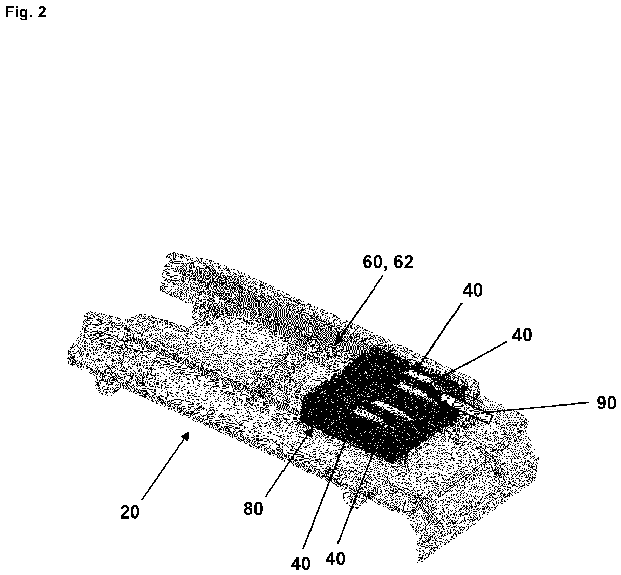

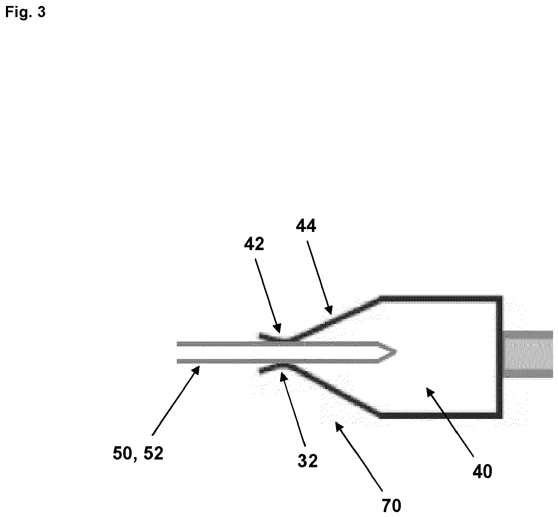

Figur 1 zeigt eine mögliche Ausgestaltung des Systems 100 aus Werkzeugmaschine 10 und Energieversorgungsvorrichtung 20. In dem in Fig. 1 dargestellten Ausführungsbeispiel der Erfindung ist die Werkzeugmaschine 10 auf der linken Bildhälfte abgebildet und die Energieversorgungsvorrichtung 20 auf der rechten Bildhälfte. Die Werkzeugmaschine 10 weist zwei männliche Kontaktpartner 50 auf, wobei insbesondere die Schwerter 52 in Fig. 1 dargestellt sind. Die männlichen Kontaktpartner 50 sind Bestandteil einer Schnittstelle 30, wobei die Schnittstelle 30 darüber hinaus auch weibliche Kontaktpartner 40 aufweist. In dem in Fig. 1 dargestellten Ausführungsbeispiel der Erfindung liegen die weiblichen Kontaktpartner 40 an der Energieversorgungsvorrichtung 20 angeordnet vor. Die weiblichen Kontaktpartner 40 können Einzelkontakte darstellen oder - wie in Fig. 1 und 2 dargestellt - in einem Block oder eine Schublade integriert vorliegen. Der Block oder die Schublade mit den weiblichen Kontaktpartnern 40 wird als Aufnahmevorrichtung 80 (siehe Fig. 2) bezeichnet. In Fig. 1 ist insbesondere der Fall dargestellt, dass die Werkzeugmaschine 10 und die Energieversorgungsvorrichtung 20 getrennt voneinander vorliegen. Die Werkzeugmaschine 10 und die Energieversorgungsvorrichtung 20 können zusammen ein System 100 bilden, wobei die Energieversorgungsvorrichtung 20 dazu eingerichtet ist, die Werkzeugmaschine 10 mit elektrischer Energie zu versorgen. Die Schnittstelle 30 umfasst darüber hinaus mindestens ein elastisches Mittel 60 zur Reduzierung eines Relativwegs zwischen den männlichen Kontaktpartnern 50 und den weiblichen Kontaktpartnern 40. Das mindestens eine elastische Mittel 60 kann ein elastisches Element 62 umfassen, das beispielsweise eine Feder oder eine Spiralfeder sein kann. Es sind aber auch alle anderen denkbaren elastischen Elemente 62 möglich und denkbar. Wenn die männlichen Kontaktpartner 50 in die weiblichen Aufnahmeklemmen 40 eingeführt werden, wird das elastische Mittel 60 zur Reduzierung eines Relativwegs zusammengedrückt, so dass ein besonders stabiler Kontakt zwischen den Kontaktpartnern 40, 50 entsteht. Ein solcher Kontakt wird in Fig. 3 gezeigt. Durch den Kontakt der Kontaktpartner 40, 50 und das Zusammendrücken des elastischen Mittels 60 zur Reduzierung eines Relativwegs ergibt sich ein Spiel bzw. ein Bewegungsraum, in dem eine Einheit 70 (siehe Fig. 3) aus männlichem Kontaktpartner 50 und weiblichem Kontaktpartner 40 vorliegen kann. Eine Bewegung oder Schwingung der Energieversorgungsvorrichtung 20 führt dann dazu, dass die Einheit 70 aus männlichem Kontaktpartner 50 und weiblichem Kontaktpartner 40 genügend Spiel hat, um nicht an die Grenzwände des Bewegungsraums anzustoßen. Dadurch ergibt sich eine Entkopplung der Energieversorgungsvorrichtung 20 von der Einheit 70 aus männlichem Kontaktpartner 50 und weiblichem Kontaktpartner 40, wodurch die Einheit 70 aus männlichem Kontaktpartner 50 und weiblichem Kontaktpartner 40 besonders gut geschützt wird. Der stabile Kontakt zwischen den Kontaktpartnern 40, 50 führt dazu, dass besonders hohe Ströme von der Energieversorgungsvorrichtung 20 an die Werkzeugmaschine 10 fließen können. Dies folgt insbesondere daraus, dass der Übergangswiderstand zwischen den Kontaktpartnern 40, 50 mit der Erfindung erheblich reduziert werden kann, so dass insbesondere auch die in einem Kontaktbereich 32 (siehe Fig. 3) zwischen den Kontaktpartnern 40, 50 gemessene Temperaturen weniger stark ansteigen als bei konventionellen Schnittstellen, wie sie aus dem Stand der Technik bekannt sind. Durch den reduzierten Übergangswiderstand und die reduzierten Temperaturen im Kontaktbereich 32 der Schnittstelle 30 verlängern sich erfreulicherweise die Lebensdauer der vorgeschlagenen Schnittstelle 30.

Auch wenn in Fig. 1 dargestellt ist, dass die männlichen Kontaktpartner 50 an der Werkzeugmaschine 10 angeordnet vorliegen und die weiblichen Kontaktpartner 40 an der Energieversorgungsvorrichtung 20, so kann auch eine gespiegelte Anordnung möglich sein, bei der die männlichen Kontaktpartner 50 an der Energieversorgungsvorrichtung 20 angeordnet vorliegen und die weiblichen Kontaktpartner 40 an der Werkzeugmaschine 10. Insbesondere kann es im Sinne der Erfindung auch bevorzugt sein, dass die männlichen Kontaktpartner 50 angefedert sind, d.h. mit einem elastischen Mittel 60 zur Reduzierung eines Relativwegs verbunden vorliegen.

Fig. 2 zeigt eine mögliche Ausgestaltung der Oberseite einer Energieversorgungsvorrichtung 20 einer bevorzugten Ausgestaltung des vorgeschlagenen Systems 100. Dargestellt sind vier weibliche Kontaktpartner 40, die in einer Aufnahmevorrichtung 80 angeordnet vorliegen. In einem nicht dargestellten Ausführungsbeispiel der Erfindung kann die Aufnahmevorrichtung 80 auch männliche Kontaktpartner 50 oder männliche Kontaktpartner 50 und weibliche Kontaktpartner 40 aufnehmen. Die Aufnahmevorrichtung 80 ist insbesondere dazu eingerichtet, die Leistungs- oder Stromkontakte 40, 50 der Schnittstelle 30 aufzunehmen.

Die Schnittstelle 30 kann Kommunikationselemente 90 aufweisen, die beispielsweise im Bereich der Aufnahmevorrichtung 80 angeordnet sein können oder Bestandteil der Aufnahmevorrichtung 80 sein können. Die Kommunikationselemente 90 können mittig bzw. zentral in der Aufnahmevorrichtung 80 angeordnet und zur Übertragung von Daten zwischen der Werkzeugmaschine 10 und der Energieversorgungsvorrichtung 20 vorgesehen sein. Außerdem zeigt Fig. 2 zwei elastische Elemente 62, die als Federn, insbesondere Spiralfedern, ausgebildet sind. Die Federn 62 bilden Mittel 60 zur Reduzierung eines Relativwegs zwischen den Strom- oder Leistungskontakten 40, 50 der Schnittstelle 30. Die Kommunikationselemente 90 können dazu eingerichtet sein, eine Kommunikationsverbindung 92 zwischen der Werkzeugmaschine 10 und der Energieversorgungsvorrichtung 20 herzustellen, wobei die Kommunikationsverbindung 92 drahtgebunden oder drahtlos ausgebildet sein kann. Die Kommunikationsverbindung 92 ist in Fig. 1 schematisch durch die gestrichelte Linie zwischen den Kommunikationselementen 90 dargestellt.

Die Aufnahmevorrichtung 80 kann darüber hinaus Kommunikationselemente 90 aufweisen, die vorzugsweise mittig bzw. zentral in der Aufnahmevorrichtung 80 angeordnet sind. Die Kommunikationselemente 90 sind vorzugsweise zur Übertragung von Daten zwischen der Werkzeugmaschine 10 und der Energieversorgungsvorrichtung 20 vorgesehen. Außerdem zeigt Fig. 2 zwei elastische Elemente 62, die als Federn, insbesondere Spiralfedern, ausgebildet sind. Die Federn 62 bilden Mittel 60 zur Reduzierung eines Relativwegs.

Fig. 3 zeigt eine mögliche Ausgestaltung einer Einheit 70 aus einem weiblichem Kontaktpartner 40 und einem männlichem Kontaktpartner 50. Dargestellt ist in Fig. 3 insbesondere eine Schnittstelle 30, die einen weiblichen Kontaktpartner 40 und einen männlichen Kontaktpartner 50 aufweist. Insbesondere zeigt Fig. 3 einen verbundenen Zustand, bei dem die Energieversorgungsvorrichtung 20 und die Werkzeugmaschine 10 miteinander verbunden vorliegen, so dass Strom bzw. elektrische Energie von der Energieversorgungsvorrichtung 20 in Richtung der Werkzeugmaschine 10 fließen kann. Das Schwert 52 des männlichen Kontaktpartners 50 befindet sich in der Aufnahmeklemme 44 bzw. den Schenkeln 44 des weiblichen Kontaktpartners 40 angeordnet vor, wobei die Kontaktpartner 40, 50 miteinander einen Kontaktbereich 32 bilden, über den der Strom bzw. die elektrische Energie von der Energieversorgungsvorrichtung 20 an die Werkzeugmaschine 10 übertragen werden kann. Der Kontaktbereich 32 bildet sich insbesondere im Bereich einer Verjüngung 42 des weiblichen Kontaktpartners 40 aus, in dem die Schenkel 44 bzw. die Komponenten der Aufnahmeklemme 44 des weiblichen Kontaktpartners 40 einen minimalen Abstand zu einander einnehmen. Dadurch legen sich die Schenkel 44 des weiblichen Kontaktpartners 40 besonders eng an das Schwert 52 des männlichen Kontaktpartners 50 an.

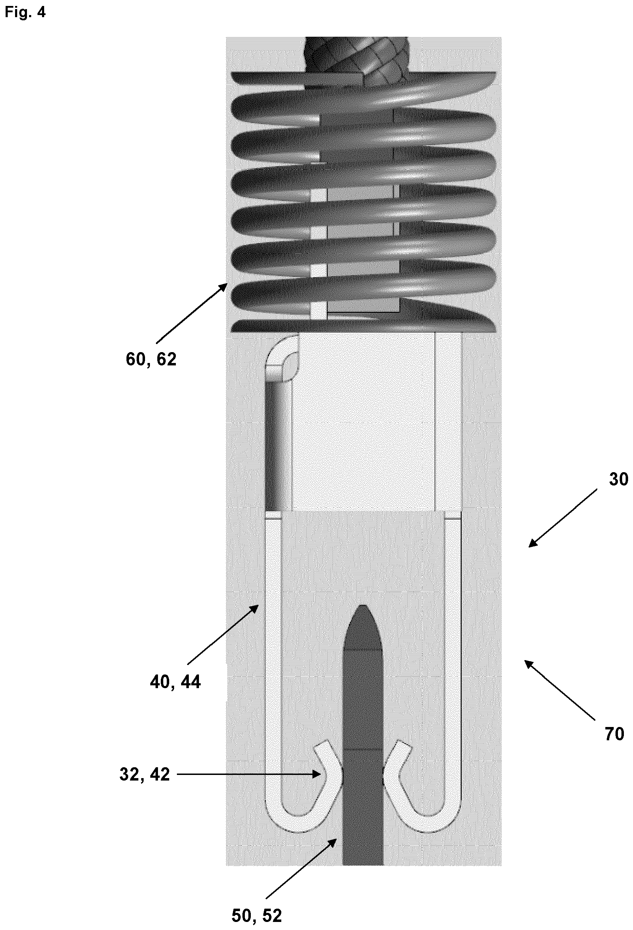

Fig. 4 zeigt eine weitere mögliche Ausgestaltung einer Einheit 70 aus einem weiblichem Kontaktpartner 40 und einem männlichem Kontaktpartner 50. Dargestellt ist in Fig. 4 insbesondere eine Schnittstelle 30, die einen weiblichen Kontaktpartner 40 und einen männlichen Kontaktpartner 50, sowie ein elastisches Mittel 60 zur Reduzierung des Relativwegs zwischen den Kontaktpartnern 40, 50 aufweist. Das Schwert 52 des männlichen Kontaktpartners 50 wird von einem Innenraum des weiblichen Kontaktpartners 40 aufgenommen, wobei dieser Innenraum von den Schenkeln 44 des weiblichen Kontaktpartners 40 gebildet wird. Der Kontakt zwischen den Kontaktpartnern 40, 50 besteht insbesondere in einem Kontaktbereich 32 der Schnittstelle 30, der bei dem in Fig. 4 dargestellten Ausführungsbeispiel der Erfindung im Bereich des geringsten Abstandes zwischen den Schenkeln 44 des weiblichen Kontaktpartners 40 angeordnet ist.

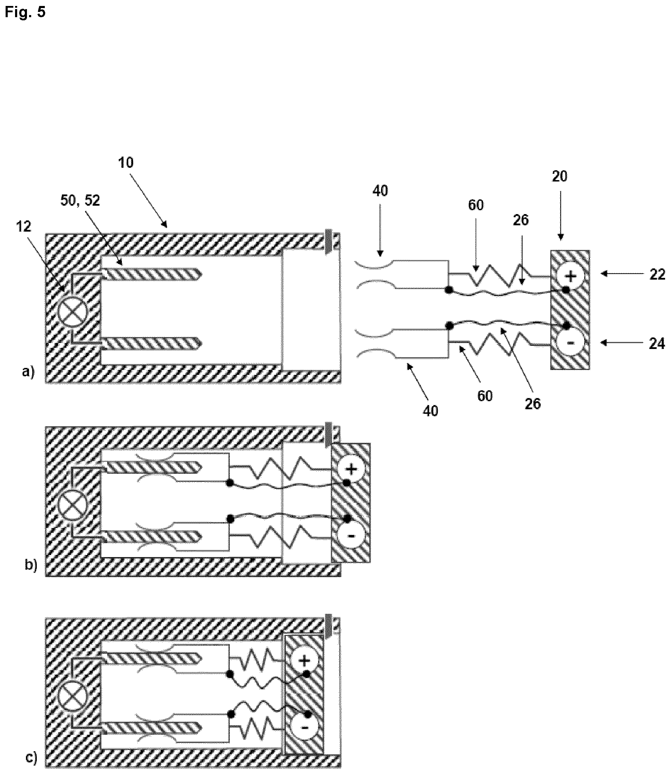

Fig. 5 zeigt einen möglichen Ablauf der Verbindung von Energieversorgungsvorrichtung 20 und Werkzeugmaschine 10. Fig. 5 umfasst drei Teilfiguren a), b) und c), wobei Teilfigur 5a) die Energieversorgungsvorrichtung 20 und Werkzeugmaschine 10 in einem getrennten Zustand zeigt, in dem die Energieversorgungsvorrichtung 20 und Werkzeugmaschine 10 getrennt voneinander vorliegen. Teilfigur 5b) zeigt Energieversorgungsvorrichtung 20 und Werkzeugmaschine 10 in dem Moment, in dem die Kontaktpartner 40, 50 der Energieversorgungsvorrichtung 20 und der Werkzeugmaschine 10 zusammen- oder aufeinandergeschoben vorliegen, wobei die elastischen Mittel 60 zur Anfederung in dem in Fig. 5b) gezeigten Zustand noch nicht elastisch verformt sind. Das bedeutet, dass die elastischen Mittel 60 zur Anfederung in dem in Fig. 5b) gezeigten Zustand noch nicht gespannt sind, so dass noch keine Anfederung der Kontaktpartner 40, 50 vorliegt. In Teilfigur 5c) ist zu erkennen, dass die elastischen Mittel 60 zur Anfederung nun zusammengedrückt, d.h. gespannt sind. Dieser Zustand entspricht vorzugsweise dem verriegelten Zustand, in dem die Energieversorgungsvorrichtung 20 und die Werkzeugmaschine 10 miteinander verbunden sind und in dem die Energieversorgungsvorrichtung 20 die Werkzeugmaschine 10 mit elektrischer Energie versorgen kann.

Die Energieversorgungsvorrichtung 20 weist einen Pluspol 22 und einen Minuspol 24 auf, wobei je ein Pol 22, 24 über je einen Stromleiter 26 mit einem Kontaktpartner, hier einem männlichen Kontaktpartner 50, verbunden vorliegen kann. Bei den Stromleitern 26 kann es sich vorzugsweise um eine elastische Stromverbindung 26 zwischen den in dem in Fig. 5 angefederten weiblichen Kontaktpartnern 40 und der Energieversorgungseinheit 20 handeln. Die elastischen Mittel 60 zur Anfederung verbinden vorzugsweise die Kontaktpartner, hier die weiblichen Kontaktpartner 40, mit der Energieversorgungsvorrichtung 20. Die Werkzeugmaschine 10 kann einen Verbraucher 12 aufweisen, bei dem es sich beispielsweise um den Motor 12 der Werkzeugmaschine 10 handeln kann. Die Bezugszeichen sind in Fig. 5 nur für Teilfigur 5a) angegeben, gelten aber für die Teilfiguren 5b) und 5c) analog.

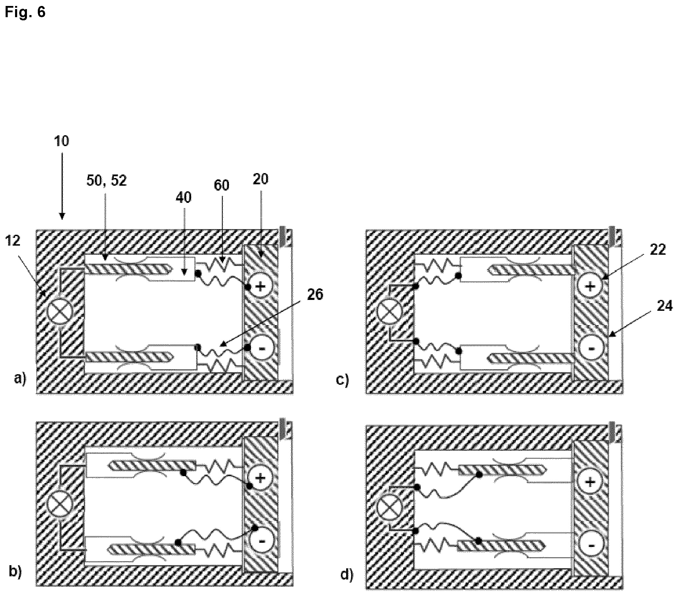

Fig. 6 zeigt verschiedene Kombinationen von Anfederungen und Anordnungen der Kontaktpartner 40, 50. Fig. 6 umfasst vier Teilfiguren a), b), c) und d), wobei bei dem in Teilfigur 6a) dargestellten Ausführungsbeispiel der Erfindung zwei männliche Kontaktpartner 50 mit ihren Schwertern 52 an der Werkzeugmaschine 10 angeordnet vorliegen. Die Werkzeugmaschine 10 kann einen Verbraucher 12, zum Beispiel einen Motor, umfassen. Die Teilfiguren von Fig. 6 zeigen die Werkzeugmaschine 10 und die Energieversorgungsvorrichtung 20 jeweils im verbundenen Zustand. Bei dem in Teilfigur 6a) dargestellten Ausführungsbeispiel der Erfindung liegen die weiblichen Kontaktpartner 40 an der Energieversorgungsvorrichtung 20 vor, wobei die dargestellte Energieversorgungsvorrichtung 20 insbesondere zwei weibliche Kontaktpartner 40 aufweist. In dem in Teilfigur 6a) dargestellten Ausführungsbeispiel der Erfindung korrespondiert somit die Anzahl der weiblichen Kontaktpartner 40 mit der Anzahl der männlichen Kontaktpartner 50. Das bedeutet in diesem Zusammenhang vorzugsweise, dass die Werkzeugmaschine 10 und die Energieversorgungsvorrichtung 20 gleich viele Kontaktpartner 40, 50 aufweisen, wobei die in Teilfigur 6a) abgebildete Werkzeugmaschine 10 zwei männliche Kontaktpartner 50 und die in Teilfigur 6a) abgebildete Energieversorgungsvorrichtung 20 zwei weibliche Kontaktpartner 40 aufweist. Die Energieversorgungsvorrichtung 20 weist zwei Pole 22, 24 auf, nämlich einen Pluspol 22 und einen Minuspol 24. Die Pole 22, 24 der Energieversorgungsvorrichtung 20 sind über je einen bevorzugt elastisch ausgebildeten Stromleiter 26 mit den Kontaktpartnern 40 verbunden, wobei die Kontaktpartner der Energieversorgungsvorrichtung 20 in Teilfigur 6a) weibliche Kontaktpartner 40 sind. In dem in Teilfigur 6a) dargestellten Ausführungsbeispiel der Erfindung liegt die Anfederung im Bereich, d.h. auf Seiten der Energieversorgungsvorrichtung 20 vor. In den in den Teilfigur 6a) und 6d) dargestellten Ausführungsbeispielen der Erfindung liegen die männlichen Kontaktpartner 50 jeweils an der Werkzeugmaschine 10, während die weiblichen Kontaktpartner 40 mit der Energieversorgungsvorrichtung 20 verbunden vorliegen. Die Bezugszeichen sind in Fig. 6 nur für Teilfigur 6a) angegeben, gelten aber für die übrigen Teilfiguren der Figur 6 analog.

Teilfigur 6b) zeigt ein Ausführungsbeispiel der Erfindung, bei dem die Werkzeugmaschine 10 weibliche Kontaktpartner 40 aufweist und die Energieversorgungsvorrichtung 20 männliche Kontaktpartner 50. Auch hier weisen sowohl Werkzeugmaschine 10, als auch Energieversorgungsvorrichtung 20 jeweils zwei Kontaktpartner 40, 50 auf. Die Schwerter 52 der männlichen Kontaktpartner 50 sind in dem in Teilfigur 6b) dargestellten Ausführungsbeispiel der Erfindung jeweils über ein elastisches Mittel 60 zur Anfederung mit der Energieversorgungsvorrichtung 20 verbunden, während die Schwerter darüber hinaus elektrisch über einen Stromleiter 26 mit je einem Pol 22, 24 der Energieversorgungsvorrichtung 20 verbunden vorliegen. Auch in dem in Teilfigur 6b) dargestellten Ausführungsbeispiel der Erfindung liegt die Anfederung im Bereich, d.h. auf Seiten der Energieversorgungsvorrichtung 20 vor.

In den in den Teilfigur 6c) und 6d) dargestellten Ausführungsbeispielen der Erfindung liegt die Anfederung jeweils im Bereich, d.h. auf Seiten der Werkzeugmaschine 10 vor. Teilfigur 6c) zeigt ebenfalls ein Ausführungsbeispiel der Erfindung, bei dem die Werkzeugmaschine 10 weibliche Kontaktpartner 40 aufweist und die Energieversorgungsvorrichtung 20 männliche Kontaktpartner 50 aufweist. Die weiblichen Kontaktpartner 40 sind über einen Stromleiter 26 leitend mit der Werkzeugmaschine 10 verbunden, wobei die elektrische Verbindung insbesondere zwischen den weiblichen Kontaktpartnern 40 und dem Verbraucher 12 der Werkzeugmaschine 10 besteht. Die weiblichen Kontaktpartner 40 sind darüber hinaus über elastische Mittel 60 zur Anfederung mit der Werkzeugmaschine 10 verbunden. Im Bereich der Energieversorgungsvorrichtung 20 sind die männlichen Kontaktpartner 50, insbesondere ihre Schwerter 52, mit je einem Pol 22, 24 der Energieversorgungsvorrichtung 20 verbunden. Die Energieversorgungsvorrichtung 20 weist zwei männliche Kontaktpartner 50 auf, wobei jedem Pol 22, 24 der Energieversorgungsvorrichtung 20 genau ein männlicher Kontaktpartner 50 zugeordnet werden kann.

Teilfigur 6d) zeigt ein Ausführungsbeispiel der Erfindung, bei dem die Werkzeugmaschine 10 männliche Kontaktpartner 50 aufweist und die Energieversorgungsvorrichtung 20 weibliche Kontaktpartner 40 aufweist. Die Anfederung, d.h. die elastischen Mittel 60 zur Anfederung, liegt bei dem in Teilfigur 6d) dargestellten Ausführungsbeispiel der Erfindung im Bereich der Werkzeugmaschine 10 vor. Die Werkzeugmaschine 10 ist über die elastischen Mittel 60 zur Anfederung mit je einem männlichen Kontaktpartner 50 bzw. seinem Schwert 52 verbunden. Darüber hinaus besteht bei dem in Teilfigur 6d) dargestellten Ausführungsbeispiel der Erfindung eine stromleitende Verbindung zwischen dem Verbraucher 12 der Werzeugmaschine 10 und den männlichen Kontaktpartnern 50. Die stromleitende Verbindung zwischen dem Verbraucher 12 der Werzeugmaschine 10 und den männlichen Kontaktpartnern 50 kann insbesondere von einem Stromleiter 26 bewirkt werden, wobei der Stromleiter 26 vorzugsweise elastisch ausgebildet sein kann. Ein elastisch ausgebildeter Stromleiter 26 ist vorteilhafterweise besonders gut dazu eingerichtet, die Beweglichkeit der Kontaktpartner 40, 50 zu unterstützen, so dass eine optimale Entkopplung der Kontaktpartner 40, 50 gewährleistet werden kann. Es kann im Sinne der Erfindung bevorzugt sein, dass der bevorzugt elastisch ausgebildete Stromleiter 26 eine Zopflitze umfasst oder von ihr gebildet wird. Vorzugsweise umfasst der bevorzugt elastisch ausgebildete Stromleiter 26 mehrere Einzeldrähte, die vorzugsweise miteinander verzwirbelt vorliegen können. Beispielsweise kann es im Sinne der Erfindung bevorzugt sein, dass der bevorzugt elastisch ausgebildete Stromleiter 26 mehr als zehn Einzeldrähte aufweist. Die Energieversorgungsvorrichtung 20 bei dem in Teilfigur 6d) dargestellten Ausführungsbeispiel der Erfindung zwei weibliche Kontaktpartner 40 auf, wobei je ein weiblicher Kontaktpartner 40 der Energieversorgungsvorrichtung 20 einem der beiden Pole 22, 24 der Energieversorgungsvorrichtung 20 zugeordnet werden kann.

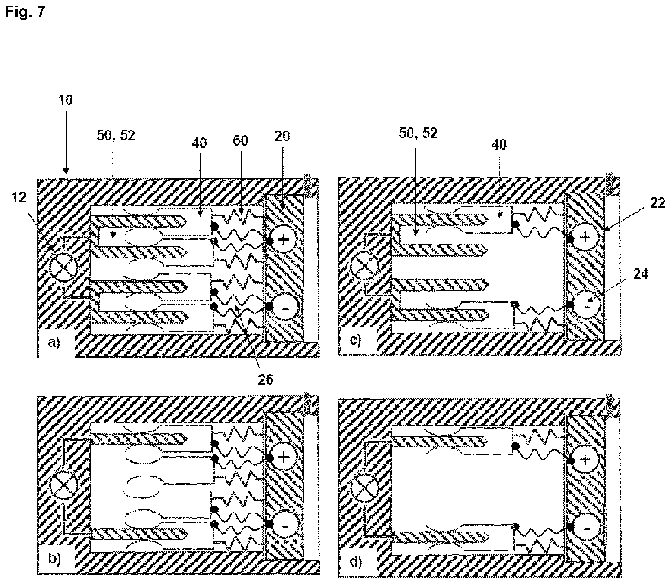

Fig. 7 zeigt verschiedene Anordnungen der Kontaktpartner 40, 50 und ihre Belegungen. Fig. 7 umfasst vier Teilfiguren a), b), c) und d), wobei bei dem in Teilfigur 7a) eine Werkzeugmaschine 10 mit vier männlichen Kontaktpartner 50 und eine Energieversorgungsvorrichtung 20 mit vier weiblichen Kontaktpartnern 40 dargestellt ist. Die männlichen Kontaktpartner 50 der Werkzeugmaschine 10 sind leitend mit einem Verbraucher 12 der Werkzeugmaschine 10 verbunden, um diesen mit elektrischer Energie, die die Werkzeugmaschine 10 der Energieversorgungsvorrichtung 20 erhält, zu versorgen. Die weiblichen Kontaktpartner 40 der Energieversorgungsvorrichtung 20 sind über je einen Stromleiter mit einem Pol 22, 24 der Energieversorgungsvorrichtung 20 verbunden, wobei in dem in Teilfigur 7a) dargestellten Ausführungsbeispiel der Erfindung zwei weibliche Kontaktpartner 40 mit dem Pluspol 22 der Energieversorgungsvorrichtung 20 und zwei andere weibliche Kontaktpartner 40 mit dem Minuspol 24 der Energieversorgungsvorrichtung 20 verbunden sind. Die Verbindung kann vorzugsweise mit einem bevorzugt elastisch ausgebildeten Stromleiter 26 erfolgen. Darüber hinaus sind die weiblichen Kontaktpartner 40 über die ein elastisches Mittel 60 zur Anfederung mit der Energieversorgungsvorrichtung 20 verbunden. Die Anfederung erfolgt in allen Teilfiguren der Fig. 7 auf Seiten der Energieversorgungsvorrichtung 20. Darüber hinaus ist allen Teilfiguren der Fig. 7 gemein, dass die männlichen Kontaktpartner 50 an der Werkzeugmaschine 10 vorliegen, während die weiblichen Kontaktpartner 40 an der Energieversorgungsvorrichtung 20 angeordnet vorliegen. Die Teilfiguren der Figuren 7 unterscheiden sich allerdings in der Anzahl der jeweils vorhandenen Kontaktpartner 40, 50 und der Anzahl der Stromübertragungs-Paare, die jeweils gebildet werden können. In dem in Teilfigur 7a) dargestellten Ausführungsbeispiel der Erfindung sind beispielsweise vier Stromübertragungs-Paare aus je einem weiblichen Kontaktpartner 40 und einem männlichen Kontaktpartner 50 abgebildet. Bei vier Stromübertragungs-Paaren kann ein Potential der Energieversorgungsvorrichtung 20 besonders gut genutzt und eine große Menge elektrische Energie von der Energieversorgungsvorrichtung 20 an die Werkzeugmaschine 10 übertragen werden. Beispielsweise können Ströme von mehr als 50 A, bevorzugt mehr als 70 A und am meisten bevorzugt von mehr als 100 A mit einer solchen Schnittstelle 30 übertragen werden. Bei den Strömen handelt es sich vorzugsweise um Konstant-Ströme. Die Bezugszeichen sind in Fig. 7 nur für Teilfigur 7a) angegeben, gelten aber für die übrigen Teilfiguren der Figur 7 analog

In dem in Teilfigur 7b) dargestellten Ausführungsbeispiel der Erfindung sind beispielsweise zwei Stromübertragungs-Paare aus je einem weiblichen Kontaktpartner 40 und einem männlichen Kontaktpartner 50 abgebildet, während zwei weibliche Kontaktpartner 40 der Energieversorgungsvorrichtung 20 nicht belegt sind, d.h. ungenutzt oder «leer» bleiben. Bei dem in Teilfigur 7b) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 7a) dargestellten Ausführungsbeispiel der Erfindung, bei dem die Schnittstelle 30 vier Stromübertragungs-Paare umfasst. Bei dem in Teilfigur 7b) dargestellten Ausführungsbeispiel der Erfindung weist die Energieversorgungsvorrichtung 20 vier weibliche Kontaktpartner 40 auf, aber die Werkzeugmaschine 10 lediglich zwei männliche Kontaktpartner 50.

In dem in Teilfigur 7c) dargestellten Ausführungsbeispiel der Erfindung sind ebenfalls zwei Stromübertragungs-Paare aus je einem weiblichen Kontaktpartner 40 und einem männlichen Kontaktpartner 50 abgebildet, während zwei männliche Kontaktpartner 50 der Werkzeugmaschine 10 nicht mit einem weiblichen Kontaktpartner 40 verbunden sind. Bei dem in Teilfigur 7c) dargestellten Ausführungsbeispiel der Erfindung kann aufgrund der geringeren Anzahl von Stromübertragungs-Paaren weniger Strom von der Energieversorgungsvorrichtung 20 an die Werkzeugmaschine 10 übertragen werden als bei dem in Teilfigur 7a) dargestellten Ausführungsbeispiel der Erfindung, bei dem die Schnittstelle 30 vier Stromübertragungs-Paare umfasst. Bei dem in Teilfigur 7c) dargestellten Ausführungsbeispiel der Erfindung weist die Werkzeugmaschine 10 vier männliche Kontaktpartner 50 auf, aber die Energieversorgungsvorrichtung 20 lediglich zwei weibliche Kontaktpartner 40.

Bei dem in Teilfigur 7d) dargestellten Ausführungsbeispiel der Erfindung weist die Werkzeugmaschine 10 zwei männliche Kontaktpartner 50 auf und die Energieversorgungsvorrichtung 20 zwei weibliche Kontaktpartner 40. Dadurch können zwei Stromübertragungs-Paare gebildet werden und die Menge der zu übertragenden Energie bzw. die Größe der Ströme, die übertragen werden kann, entspricht den in den Teilfigur 7b) und 7c) dargestellten Ausführungsbeispielen der Erfindung.

Bei den in den Fig. 5 bis 7 dargestellten Ausführungsbeispielen der Erfindung wird jeweils eine Einzel-Anfederung gezeigt, d.h. dass auf Seiten des Verbindungspartners der Schnittstelle 30, bei dem die Anfederung erfolgt, jeder Kontaktpartner 40, 50 ein elastisches Mittel 60 zur Anfederung aufweist. Das bedeutet, dass die Kontaktpartner 40, 50 einzeln angefedert sind.

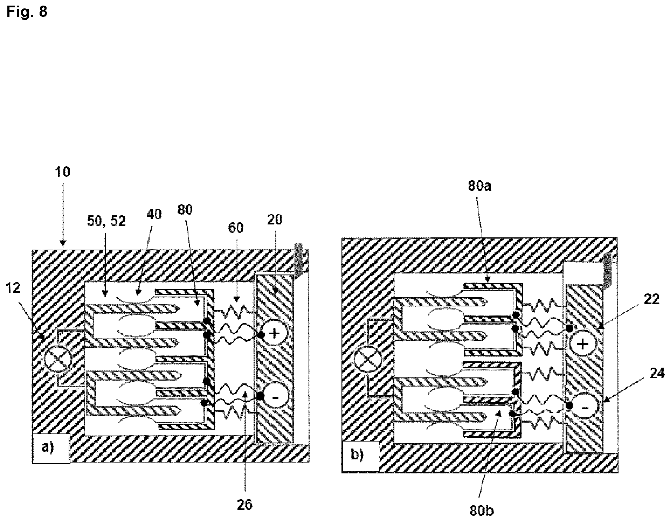

In Fig. 8 sind Aufnahmevorrichtungen 80 dargestellt, die bei dem in Teilfigur 8a) dargestellten Ausführungsbeispiel der Erfindung die vier weiblichen Kontaktpartner 40 der Energieversorgungsvorrichtung 20 umfasst. Die weiblichen Kontaktpartner 40 liegen in bekannter Weise mit den Schwertern 52 der männlichen Kontaktpartner 50 wirkverbunden vor, so dass Stromübertragungs-Paare gebildet werden, wobei in dem in Teilfigur 8a) dargestellten Ausführungsbeispiel der Erfindung vier Stromübertragungs-Paare gebildet werden. Die in in Teilfigur 8a) dargestellte Aufnahmevorrichtung 80 ist Bestandteil der Energieversorgungsvorrichtung 20 und über vier Stromleiter 26 mit den Polen 22, 24 der Energieversorgungsvorrichtung 20 verbunden, sowie mechanisch über zwei elastische Mittel 60 zur Anfederung mit der Energieversorgungsvorrichtung 20. Die Aufnahmevorrichtung 80 bildet vorzugsweise einen Kontaktblock, der mit einer bestimmten Anzahl elastischer Mittel 60 zur Anfederung als Block angefedert werden kann.

Bei dem in Teilfigur 8b) dargestellten Ausführungsbeispiel der Erfindung sind zwei Aufnahmevorrichtungen 80 dargestellt, wobei je zwei weibliche Kontaktpartner 40 in einer Aufnahmevorrichtung 80 vorliegen. Jede der beiden Aufnahmevorrichtungen 80 ist über zwei elastische Mittel 60 zur Anfederung mit der Energieversorgungsvorrichtung 20 verbunden, sowie mit zwei Stromleitern 26 mit den Polen 22, 24 der Energieversorgungsvorrichtung 20. Dabei stellen je zwei Stromleiter 26 eine Verbindung zwischen dem Pluspol 22 der Energieversorgungsvorrichtung 20 und der ersten Aufnahmevorrichtung 80a her, während zwei andere Stromleiter 26 die Verbindung zwischen dem Minuspol 24 der Energieversorgungsvorrichtung 20 und der zweiten Aufnahmevorrichtung 80b herstellen. Die Bezugszeichen sind in Fig. 8 nur für Teilfigur 8a) angegeben, gelten aber für die übrigen Teilfiguren der Figur 8 analog.

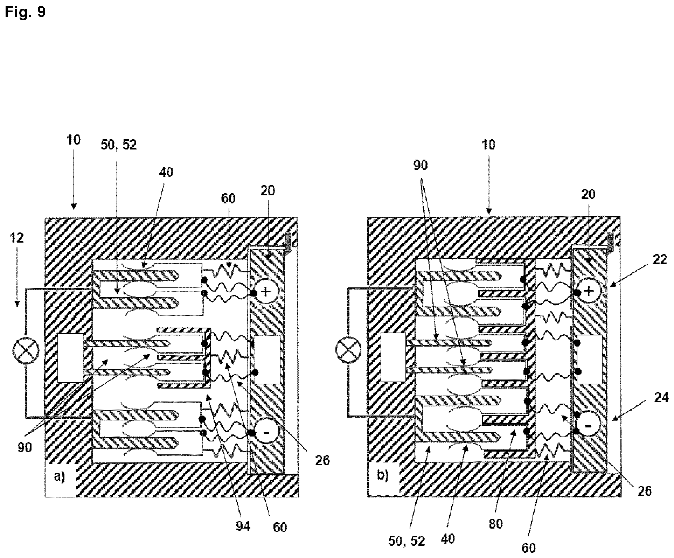

Fig. 9 zeigt eine mögliche Integration von Kommunikations-Elementen 90 bzw. einer Kommunikations-Aufnahmevorrichtung 94 in die Schnittstelle 30. Die in Fig. 9a dargestellte Werkzeugmaschine 10 weist vier männliche Kontaktpartner 50 auf, die mit je einem weiblichen Kontaktpartner 40 der Energieversorgungsvorrichtung 20 verbunden vorliegen und ein Stromübertragungs-Paar bilden. Die in Fig. 9a dargestellte Schnittstelle 30 weist somit vier Stromübertragungs-Paare auf. Die Anfederung erfolgt in dem in Fig. 9a dargestellten Ausführungsbeispiel der Erfindung auf Seiten der Energieversorgungsvorrichtung 20, wobei jeder der vier weiblichen Kontaktpartner 40 der Energieversorgungsvorrichtung 20 über je ein elastisches Mittel 60 zur Anfederung mit der Energieversorgungsvorrichtung 20 verbunden ist.

Bei dem in Fig. 9a dargestellten Ausführungsbeispiel der Erfindung sind die weiblichen Kontaktpartner 40 einzeln angefedert. Je zwei weibliche Kontaktpartner 40 der Energieversorgungsvorrichtung 20 sind über je einen Stromleiter 26 mit dem Pluspol 22 der Energieversorgungsvorrichtung 20 verbunden, während die zwei anderen weibliche Kontaktpartner 40 der Energieversorgungsvorrichtung 20 über je einen Stromleiter 26 mit dem Minuspol 24 der Energieversorgungsvorrichtung 20 verbunden vorliegen.

Die in Fig. 9a dargestellte Schnittstelle 20 weist darüber hinaus Kommunikationselemente 90 auf, wobei auf Seiten der Werkzeugmaschine 10 zwei männliche Kommunikationselemente 90 vorliegen und auf Seiten der Energieversorgungsvorrichtung 20 zwei weibliche Kommunikationselemente 90. Selbstverständlich können auch auf Seiten der Werkzeugmaschine 10 zwei weibliche Kommunikationselemente 90 vorliegen und auf Seiten der Energieversorgungsvorrichtung 20 zwei männliche Kommunikationselemente 90. Die Kommunikationselemente 90 haben eine eigene Kommunikations-Aufnahmevorrichtung 94, die separat, d.h. unabhängig von den Leistungskontakten 40, 50, angefedert sein kann. Dazu kann die Kommunikations-Aufnahmevorrichtung 94 ein eigenes elastisches Mittel 60 zur Anfederung umfassen.

In dem in Fig. 9b dargestellten Ausführungsbeispiel der Erfindung ist eine gemeinsame Aufnahmevorrichtung 80 abgebildet, die dazu eingerichtet ist, sowohl die Leistungskontakte 40, 50, als auch die Kommunikationselemente 90 aufzunehmen. Die Aufnahmevorrichtung 80 in Fig. 9b ist über zwei elastische Mittel 60 zur Anfederung angefedert, d.h. in dem in Fig. 9b dargestellten Ausführungsbeispiel der Erfindung ist der Kontaktblock als Ganzes über zwei elastische Mittel 60 zur Anfederung angefedert. Selbstverständlich können die Aufnahmevorrichtungen 80 auch auf Seiten der Werkzeugmaschinen 10 angeordnet vorliegen, wobei die Aufnahmevorrichtungen 80 auf beiden Seiten - Werkzeugmaschinen 10 und Energieversorgungsvorrichtung 20 - männliche Kontaktpartner 50 oder weibliche Kontaktpartner 40 aufnehmen können.

### Bezugszeichenliste

- 10: Werkzeugmaschine
- 12: Verbraucher in der Werkzeugmaschine, z.B Motor
- 20: Energieversorgungsvorrichtung
- 22: Pluspol der Energieversorgungsvorrichtung
- 24: Minuspol der Energieversorgungsvorrichtung
- 26: Stromleiter
- 30: Schnittstelle
- 32: Kontaktbereich
- 40: weiblicher Kontaktpartner
- 42: Verjüngung
- 44: Schenkel des weiblichen Kontaktpartners
- 50: männlicher Kontaktpartner
- 52: Schwert
- 60: Mittel zur Reduzierung einer Relativbewegung
- 62: elastisches Element
- 70: Einheit aus weiblichem und männlichem Kontaktpartner
- 80: Aufnahmevorrichtung
- 90: Kommunikationselement
- 92: Kommunikationsverbindung
- 94: Kommunikations-Aufnahmevorrichtung
- 100: System

## Patentansprüche

1. System (100) umfassend eine Werkzeugmaschine (10) und eine Energieversorgungsvorrichtung (20) zur Versorgung der Werkzeugmaschine (10) mit elektrischer Energie, wobei die Energieversorgungsvorrichtung (20) über eine Schnittstelle (30) lösbar mit der Werkzeugmaschine (10) verbindbar ist, wobei die Schnittstelle (30) mindestens einen weiblichen Kontaktpartner (40) und einen männlichen Kontaktpartner (50) umfasst, **dadurch gekennzeichnet, dass**
die Schnittstelle (30) mindestens ein elastisches Mittel (60) zur Reduzierung einer Relativbewegung zwischen den Kontaktpartnern (40, 50) aufweist, wobei das elastische Mittel (60) zur Reduzierung der Relativbewegung zwischen den Kontaktpartnern (40, 50) dazu eingerichtet ist, an dem mindestens einen männlichen Kontaktpartner (50) und/oder an dem mindestens einen weiblichen Kontaktpartner (40) anzugreifen.

2. System (100) nach Anspruch 1
**dadurch gekennzeichnet, dass**
derjenige Kontaktpartner (40 oder 50), an dem das elastische Mittel (60) zur Reduzierung der Relativbewegung angreift, beweglich gelagert ist.

3. System (100) nach Anspruch 1 oder 2
**dadurch gekennzeichnet, dass**
der mindestens eine männliche Kontaktpartner (50) an der Werkzeugmaschine (10) angeordnet vorliegt und/oder dass der mindestens eine weibliche Kontaktpartner (40) an der Energieversorgungsvorrichtung (20) angeordnet vorliegt.

4. System (100) nach einem der vorhergehenden Ansprüche
**dadurch gekennzeichnet, dass**
das mindestens eine elastische Mittel (60) zur Reduzierung der Relativbewegung mindestens ein elastisches Element (62) umfassen.

5. System (100) nach einem der vorhergehenden Ansprüche
**dadurch gekennzeichnet, dass**
je ein männlicher Kontaktpartner (50) und ein weiblicher Kontaktpartner (40) eine Einheit (70) bilden, die in einem verbundenen Zustand entkoppelt von einer Bewegung der Energieversorgungsvorrichtung (20) und/oder von einer Bewegung der Werkzeugmaschine (10) vorliegt.

6. System (100) nach einem der vorhergehenden Ansprüche
**dadurch gekennzeichnet, dass**
die Schnittstelle (30) mindestens einen elastisch ausgebildeten Stromleiter (26) aufweist.

7. System (100) nach einem der vorhergehenden Ansprüche
**dadurch gekennzeichnet, dass**
die Schnittstelle (30) Kommunikationselemente (90) zum Austausch von Daten zwischen der Werkzeugmaschine (10) und der Energieversorgungsvorrichtung (20) umfasst.

8. System (100) nach Anspruch 7
**dadurch gekennzeichnet, dass**
die Kommunikationselemente (90) eine Kommunikationsverbindung bilden, wobei die Kommunikationsverbindung drahtgebunden oder drahtlos ausgebildet ist.

9. System (100) nach Anspruch 7 oder 8
**dadurch gekennzeichnet, dass**
die Kommunikationselemente (90) in einer Kommunikations-Aufnahmevorrichtung angeordnet vorliegen, wobei die Kommunikationselemente (90) und/oder die Kommunikations-Aufnahmevorrichtung ein elastisches Mittel (60) aufweisen.

10. System (100) nach einem der vorhergehenden Ansprüche
**dadurch gekennzeichnet, dass**
die Schnittstelle (30) eine Aufnahmevorrichtung (80) zur Aufnahme von mindestens einem weiblichen Kontaktpartner (40) und/oder von mindestens einem männlichen Kontaktpartner (50) umfasst.

11. System (100) nach Anspruch 10
**dadurch gekennzeichnet, dass**
mindestens ein Kommunikationselement (90) in der Aufnahmevorrichtung (80) integriert vorliegt.

12. System (100) nach einem der vorhergehenden Ansprüche
**dadurch gekennzeichnet, dass**
das mindestens eine elastische Mittel (60) zur Reduzierung der Relativbewegung der Aufnahmevorrichtung (80) zugeordnet ist oder dass mindestens ein elastisches Mittel (60) zur Reduzierung der Relativbewegung je einem Kontaktpaar aus weiblichen Kontaktpartner (40) und männlichen Kontaktpartner (50) zugeordnet ist.

13. Energieversorgungsvorrichtung (20) zur Verwendung in dem System nach einem der Ansprüche 1 bis 12
**dadurch gekennzeichnet, dass**
die Energieversorgungsvorrichtung (20) mindestens eine Energiespeicherzelle aufweist, wobei die mindestens eine Energiespeicherzelle einen Innenwiderstand DCR_I von kleiner als 10 Milliohm aufweist.

14. Energieversorgungsvorrichtung (20) zur Verwendung in dem System nach einem der Ansprüche 1 bis 12
**dadurch gekennzeichnet, dass**
die Energieversorgungsvorrichtung (20) mindestens eine Energiespeicherzelle aufweist, wobei ein Verhältnis eines Widerstands der mindestens einen Energiespeicherzelle zu einer Oberfläche A der mindestens einen Energiespeicherzelle kleiner als 0,2 Milliohm/cm² ist, bevorzugt kleiner als 0,1 Milliohm/cm², am meisten bevorzugt kleiner als 0,05 Milliohm/cm².

15. Energieversorgungsvorrichtung (20) zur Verwendung in dem System nach einem der Ansprüche 1 bis 12
**dadurch gekennzeichnet, dass**
die Energieversorgungsvorrichtung (20) mindestens eine Energiespeicherzelle aufweist, wobei die mindestens eine Energiespeicherzelle eine Oberfläche A und ein Volumen V aufweisen, wobei ein Verhältnis A/V von Oberfläche zu Volumen größer ist als das Sechsfache, bevorzugt das Achtfache und besonders bevorzugt das Zehnfache des Kehrwerts der dritten Wurzel des Volumens.
